# EUROPEAN PATENT APPLICATION

(11) **EP 4 804 606 A1**
(43) Date of publication of application: **09.09.2026**
(21) Application number: 23957645.7
(22) Date of filing: 01.11.2023
(51) Int. Cl.: H04W 24/10, H04W 72/02, H04W 72/0446, H04W 72/566, H04W 88/02

(54) **TERMINAL AND COMMUNICATION METHOD**

(71) Applicant: NTT DOCOMO, INC., Tokyo 100-6150 (JP)
(72) Inventor: KUMAGAI, Shinya, Tokyo 100-6150 (JP); NAGATA, Satoshi, Tokyo 100-6150 (JP); PI, Qiping, Beijing 100190 (CN); WANG, Jing, Beijing 100190 (CN); CHEN, Lan, Beijing 100190 (CN)
(74) Representative: Hoffmann Eitle
(86) International application number: PCT/JP2023/039463
(87) International publication number: WO 2025/094317

(57) **Abstract**

A terminal includes: a communication section that receives, from a base station, first information related to an extended period for measurement using a measurement signal; and a control section that periodically configures the extended period for the measurement using the measurement signal based on the first information, in which the communication section transmits second information indicating that the measurement is not performed to the base station, and the control section does not perform the measurement and the communication section performs reception or transmission of a signal from or to the base station according to the transmission of the second information in a part of the extended period that is periodic.

## Description

### Technical Field

The present disclosure relates to a terminal and a communication method.

### Background Art

3rd Generation Partnership Project (3GPP (registered trademark)) standardizes a fifth generation mobile communication system (5G, also referred to as New Radio (NR) or Next Generation (NG)), and is also promoting the standardization of next-generation systems called Beyond 5G, 5G Evolution, or 6G.

In 5G, technologies for satisfying a large-capacity system, high data transmission speed, low delay, simultaneous connection of a large number of terminals, low cost, low power consumption, and the like as requirements are being studied (see, for example, Non-Patent Literature (hereinafter, referred to as "NPL") 1).

The enhancements of the mobile communication system as described above are expected to promote the use and spread of extended reality (XR) such as virtual reality (VR), augmented reality (AR), and mixed reality (MR), which enable a combination of the real world and the virtual world (virtual content), and in 3GPP, discussions on enhancements for XR are being carried out for Release 19 (for example, see NPL 2).

In relation to the enhancements for XR, for example, enhancements related to a measurement gap (MG) and a scheduling restriction are widely discussed.

For example, regarding the scheduling restriction related to the inter-frequency RRM measurement between FR1 and FR2 with the measurement gap and the intra-frequency RRM measurement of FR2 without the measurement gap, identifying enhancements for reducing the influence on the capacity and the influence on each terminal may be included in the scope of the standards in the future.

### Citation List

### Non Patent Literature

NPL 1
   3GPP TS 38.300 V17.6.0 (2023-09)
NPL 2
   "Moderator's summary for REL-19 RAN2 topic Enhancements for XR," RP-232619, 3GPP TSG-RAN Meeting #101, 3GPP, September 2023

### Summary of Invention

In the current radio communication system, a measurement using a synchronization signal block (SSB) (SSB-based measurement) is used.

For the SSB-based measurement, a timing configuration (SSB-based Measurement Timing Configuration (SMTC)) related to the measurement is indicated to the terminal, and the terminal performs the measurement based on a signal to be measured in the configured SMTC window. In addition, for switching of a radio frequency (RF), a configuration related to the measurement gap can be indicated to the terminal for the SSB-based measurement.

When the SMTC window or the measurement gap overlaps with a transmission and reception of a signal related to XR traffic due to the periodicity of the XR traffic, a problem may occur that the signal cannot be scheduled, and the capacity loss occurs due to the scheduling restriction associated with the measurement.

In addition, in the current radio communication system, other measurements such as a measurement (CSI-RS-based measurement) using a channel state information-reference signal (CSI-RS) are also used, and the above-described problem may occur in various measurements. In addition, the above-described problem may occur in the transmission and reception of a signal other than the signal related to the XR traffic.

An aspect of the present disclosure provides a terminal and a communication method that can reduce an influence caused by a scheduling restriction related to measurement.

A terminal according to one aspect of the present disclosure includes: a communication section that receives, from a base station, first information related to an extended period for measurement using a measurement signal; and a control section that periodically configures the extended period for the measurement using the measurement signal based on the first information, in which the communication section transmits second information indicating that the measurement is not performed to the base station, and the control section does not perform the measurement and the communication section performs reception or transmission of a signal from or to the base station according to the transmission of the second information in a part of the extended period that is periodic.

### Brief Description of Drawings

FIG. 1 is a diagram showing an example of a radio communication system according to an embodiment of the present disclosure;
FIG. 2 is a diagram showing an example of a frequency range used in the radio communication system according to the embodiment of the present disclosure;
FIG. 3 is a diagram showing an exemplary configuration of a radio frame, a subframe, and a slot used in the radio communication system according to the embodiment of the present disclosure;
FIG. 4 is a diagram showing an example in which transmission/reception of a channel/signal is prioritized over RRM measurement based on a predefined condition according to the embodiment of the present disclosure;
FIG. 5 is a diagram showing an example in which transmission/reception of a channel/signal is prioritized over RRM measurement based on a priority state value according to the embodiment of the present disclosure;
FIG. 6 is a diagram showing an example in which RRM measurement is prioritized over transmission/reception of a channel/signal based on a priority state value according to the embodiment of the present disclosure;
FIG. 7 is a diagram showing an exemplary indication of skipping of a measurement gap occasion from a base station according to the embodiment of the present disclosure;
FIG. 8 is a diagram showing an exemplary indication of skipping of a measurement gap occasion from a base station according to the embodiment of the present disclosure;
FIG. 9 is a diagram showing an exemplary indication of skipping of a measurement gap occasion from a base station according to the embodiment of the present disclosure;
FIG. 10 is a diagram showing an exemplary indication of skipping of a measurement gap occasion from a base station according to the embodiment of the present disclosure;
FIG. 11 is a diagram showing an exemplary indication of skipping of a measurement gap occasion from a base station according to the embodiment of the present disclosure;
FIG. 12 is a diagram showing an exemplary request for skipping of a measurement gap by a terminal according to the embodiment of the present disclosure;
FIG. 13 is a diagram showing an exemplary request for skipping of a measurement gap by a terminal according to the embodiment of the present disclosure;
FIG. 14 is a diagram showing an exemplary request for skipping of a measurement gap by a terminal according to the embodiment of the present disclosure;
FIG. 15 is a diagram showing an exemplary request for skipping of a measurement gap by a terminal according to the embodiment of the present disclosure;
FIG. 16 is a diagram showing an exemplary request for skipping of RRM measurement by a terminal according to the embodiment of the present disclosure;
FIG. 17 is a diagram showing an exemplary request for skipping of RRM measurement by a terminal according to the embodiment of the present disclosure;
FIG. 18 is a diagram showing an exemplary request for skipping of RRM measurement by a terminal according to the embodiment of the present disclosure;
FIG. 19 is a diagram showing an exemplary request for skipping of RRM measurement by a terminal according to the embodiment of the present disclosure;
FIG. 20 is a diagram showing an exemplary operation of a terminal according to the embodiment of the present disclosure;
FIG. 21 is a diagram showing an exemplary operation of a terminal according to the embodiment of the present disclosure;
FIG. 22 is a diagram showing an exemplary operation of a terminal according to the embodiment of the present disclosure;
FIG. 23 is a diagram showing an exemplary operation of a terminal according to the embodiment of the present disclosure;
FIG. 24 is a diagram showing an exemplary operation of a terminal according to the embodiment of the present disclosure;
FIG. 25 is a diagram showing an exemplary operation of a terminal according to the embodiment of the present disclosure;
FIG. 26 is a block diagram showing an example of a configuration of a base station according to the embodiment of the present disclosure;
FIG. 27 is a block diagram showing an example of a configuration of a terminal according to the embodiment of the present disclosure;
FIG. 28 is a diagram showing an example of a hardware configuration of a base station and a terminal according to the embodiment of the present disclosure; and
FIG. 29 is a diagram showing an example of a configuration of a vehicle according to the embodiment of the present disclosure.

### Description of Embodiments

Hereinafter, an embodiment according to an aspect of the present disclosure will be described with reference to the drawings.

### (Embodiment)

### <Radio Communication System>

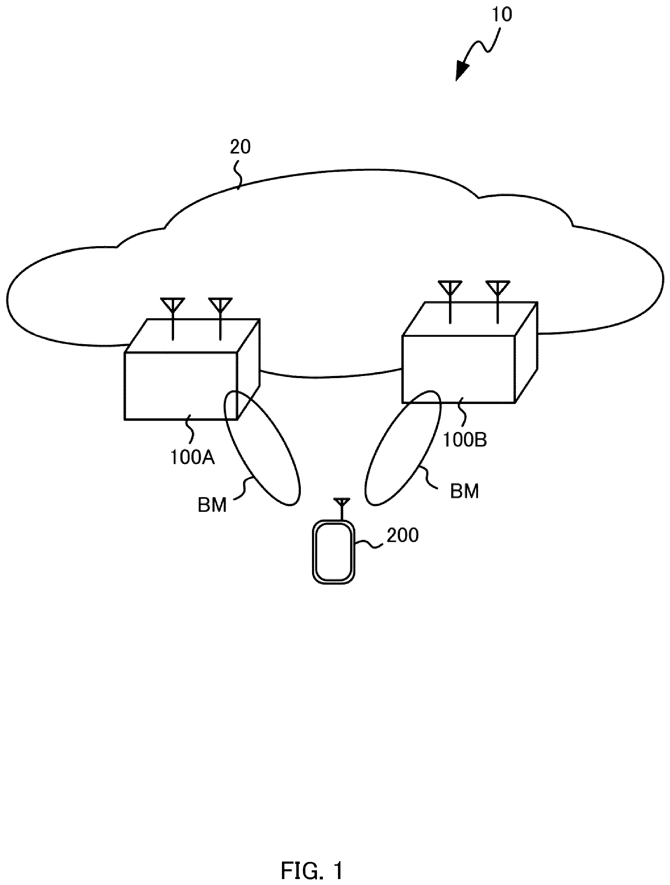

FIG. 1 is a diagram showing an example of radio communication system 10 according to the embodiment of the present disclosure. Radio communication system 10 is a radio communication system according to 5G NR, and includes Next Generation-Radio Access Network 20 (hereinafter, also referred to as NG-RAN 20) and terminal 200 (hereinafter, also referred to as user equipment (UE) 200).

Radio communication system 10 may be a radio communication system according to a system called Beyond 5G, 5G Evolution, or 6G.

NG-RAN 20 includes base station 100A (hereinafter, also referred to as gNB 100A) and base station 100B (hereinafter, also referred to as gNB 100B). When it is not necessary to distinguish between gNB 100A, gNB 100B, and the like, the gNB or base station 100 is collectively referred to. In addition, the numbers of the gNBs and the UEs are not limited to the example shown in FIG. 1.

NG-RAN 20 actually includes a plurality of NG-RAN nodes, specifically, gNB (or ng-eNB), and is connected to a core network (5GC, not shown) according to 5G. NG-RAN 20 and the 5GC may be simply referred to as a "network". In addition, in the following, the gNB may be replaced with a network (NW).

gNB 100A and gNB 100B are, for example, base stations according to 5G, and perform radio communication according to 5G with UE 200. gNB 100A, gNB 100B, and UE 200 may support multiple-input multiple-output (MIMO) in which a beam BM having higher directivity is generated by controlling a radio signal transmitted from a plurality of antenna elements, carrier aggregation (CA) in which a plurality of component carriers (CCs) are used in combination, dual connectivity (DC) in which communication is performed between the UE and each of two NG-RAN nodes, and the like.

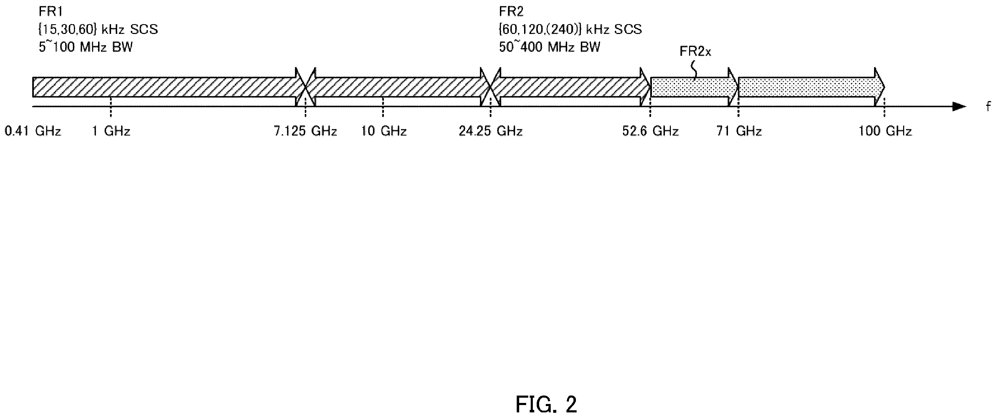

In addition, radio communication system 10 may support a plurality of frequency ranges (FRs). FIG. 2 is a diagram showing an example of the FR used in radio communication system 10. As shown in FIG. 2, radio communication system 10 may correspond to FR1 and FR2. The frequency band of each FR is, for example, as follows.
· FR1: 410 MHz to 7.125 GHz
· FR2: 24.25 GHz to 52.6 GHz

In FR1, a sub-carrier spacing (SCS) of 15 kHz, 30 kHz, or 60 kHz may be used, and a bandwidth (BW) of 5 to 100 MHz may be used. FR2 is a higher frequency than FR1, and an SCS of 60 kHz or 120 kHz (240 kHz may be included) may be used, and a bandwidth (BW) of 50 to 400 MHz may be used.

The SCS may be interpreted as numerology. The numerology is defined in 3GPP TS 38.300, and corresponds to one sub-carrier spacing in a frequency domain.

Further, radio communication system 10 may support a higher frequency band than the frequency band of FR2. Specifically, radio communication system 10 may support a frequency band exceeding 52.6 GHz and up to 114.25 GHz. Such a high frequency band may be referred to as "FR2x" for convenience. In a case of using a band exceeding 52.6 GHz, cyclic prefix-orthogonal frequency division multiplexing (CP-OFDM)/discrete Fourier transform-spread-orthogonal frequency division multiplexing (DFT-S-OFDM) having a larger SCS may be applied.

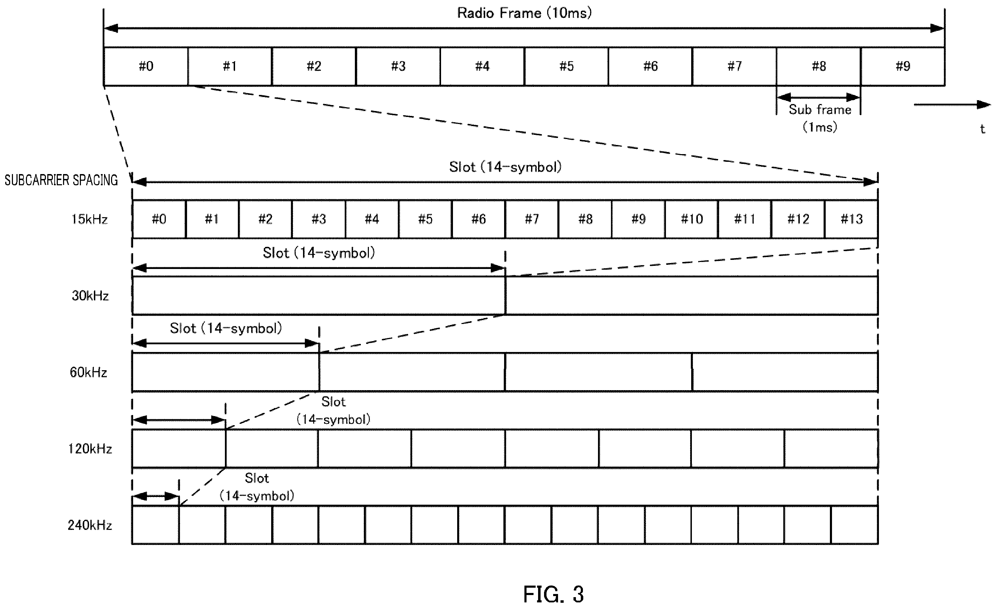

FIG. 3 is a diagram showing an exemplary configuration of a radio frame (system frame), a subframe, and a slot used in radio communication system 10. As shown in FIG. 3, one slot is constituted by 14 symbols, and as the SCS increases (widens), the symbol period (and the slot period) is shortened. However, the SCS is not limited to the interval (frequency) shown in FIG. 3. For example, 480 kHz, 960 kHz, or the like may be used as the SCS.

In addition, the number of symbols constituting one slot may not necessarily be 14 symbols (for example, may be 28 or 56 symbols). Further, the number of slots per subframe may be different depending on the SCS.

The time direction (t) shown in FIG. 3 may be referred to as a time domain, a symbol period, a symbol time, or the like. In addition, the frequency direction may be referred to as a frequency domain, a resource block, a subcarrier, a bandwidth part (BWP), or the like.

gNB 100 transmits, as a downlink (DL) signal, control information, configuration information, and the like to UE 200.

In addition, for example, gNB 100 receives, as an uplink (UL) signal, control information, a data signal, information related to a processing capability of UE 200 (terminal capability (information); for example, UE capability), and the like from UE 200.

The channel used for the transmission of the DL signal includes, for example, a data channel and a control channel. For example, the data channel may include a physical downlink shared channel (PDSCH), and the control channel may include a physical downlink control channel (PDCCH). For example, gNB 100 transmits the control information to UE 200 using the PDCCH, and transmits the data signal of the DL using the PDSCH. The PDSCH is an example of a downlink shared channel, and the PDCCH is an example of a downlink control channel. The PDCCH may be replaced with downlink control information (DCI), control information, and the like transmitted in the PDCCH.

The reference signal included in the DL signal may include, for example, at least one of a demodulation reference signal (DMRS), a phase tracking reference signal (PTRS), a channel state information-reference signal (CSI-RS), a sounding reference signal (SRS), or a positioning reference signal (PRS) for position information. For example, the reference signal such as the DMRS and the PTRS is used for demodulating the data signal of the DL, and is transmitted using the PDSCH.

UE 200 is a communication apparatus provided with a radio communication function, such as a smartphone, a mobile phone, a tablet, a wearable terminal, and a machine-to-machine (M2M) communication module.

UE 200 receives a control signal or a data signal from gNB 100 in the DL, and transmits a control signal or a data signal to gNB 100 in the UL, to use various communication services provided by radio communication system 10. In addition, UE 200 receives various reference signals transmitted from gNB 100, and performs measurement on a propagation path quality based on a reception result of the reference signal.

For example, UE 200 receives, as the DL signal, control information, configuration information, and the like from gNB 100.

In addition, for example, UE 200 transmits, as the UL signal, control information, a data signal, terminal capability information of UE 200, and the like to gNB 100.

The channel used for the transmission of the UL signal includes, for example, a data channel and a control channel. For example, the data channel may include a physical uplink shared channel (PUSCH), and the control channel may include a physical uplink control channel (PUCCH). For example, UE 200 transmits the control information using the PUCCH, and transmits the data signal of the UL using the PUSCH. The PUSCH is an example of an uplink shared channel, and the PUCCH is an example of an uplink control channel. The PUSCH or the PUCCH may be replaced with uplink control information (UCI), control information, and the like transmitted in the PUSCH or the PUCCH.

The reference signal included in the UL signal may include, for example, at least one of a DMRS, a PTRS, a CSI-RS, an SRS, or a PRS for position information. For example, the reference signal such as the DMRS and the PTRS is used for demodulating the data signal of the UL, and is transmitted using the PUSCH.

### <Discussion Status on XR>

XR presents attractive use cases for a future radio communication system. On the other hand, XR also poses problems that need to be studied and addressed. As one of the problems, in 3GPP, discussions on enhancements for XR are being carried out toward Release 19 (for example, see NPL 2), and enhancements related to the measurement gap and the scheduling restriction are widely discussed.

### <On SSB and SSB Measurement>

There is a signal and/or a channel transmitted from the base station to the terminal periodically. Examples of such a signal and/or a channel include a synchronization signal block (SSB).

The SSB is used by the terminal, for example, for measuring received power (for example, synchronization signal reference signal received power (SS-RSRP)) or reception quality (for example, synchronization signal reference signal received quality (SS-RSRQ)) (SSB-based measurement). The measurement is an example of radio resource management (RRM) measurement.

For the SSB-based measurement, a timing configuration (SMTC) related to the measurement is indicated to the terminal. The SMTC may include a length, a period, a timing offset, and the like of an SSB-based measurement period (may be referred to as an SMTC window, a measurement timing, and the like). The terminal performs the measurement based on the signal to be measured in the configured SMTC window.

In addition, for switching of a radio frequency (RF), a configuration related to the measurement gap can be indicated to the terminal for the SSB-based measurement. The measurement gap is an extended period for measurement, in which an additional period can be added before and after the SMTC window. The configuration related to the measurement gap may also include a length, a period, and the like.

In addition, examples of the RRM measurement also include measurement (CSI-RS measurement) based on the CSI-RS.

In NR, the following RRM measurements are used, including the SSB-based measurement and the CSI-RS measurement, with a measurement gap or without a measurement gap.
(1) Same-frequency measurement or Intra-frequency measurement
(2) Different-frequency measurement or Inter-frequency measurement

The terminal can perform the above-described RRM measurement and the transmission and reception of the signal using at least one frequency band (carrier frequency) of a first frequency band (FR1) and a second frequency band (FR2).

### <Scheduling Restriction Related to RRM Measurement>

Regarding the intra-frequency SSB-based measurement, a scheduling restriction (terminal operation restriction) related to an intra-frequency SSB-based measurement without a measurement gap, an intra-frequency SSB-based measurement with a Network Configured Small Gap (NCSG), and an intra-frequency SSB-based measurement with a measurement gap is described in the following portions in the current standard.
Intra-frequency SSB-based measurement without measurement gap: TS 38.133 clause 9.2.5.3 (in brief, when a condition is satisfied, a scheduling restriction is imposed on an SSB symbol measured in the SMTC window or all symbols in the SMTC window)
Intra-frequency SSB-based measurement with NCSG: TS 38.133 clause 9.2.5.3
Intra-frequency SSB-based measurement with measurement gap: TS 38.133 clause 9.1.2

Regarding the inter-frequency SSB-based measurement, a scheduling restriction (terminal operation restriction) related to an inter-frequency SSB-based measurement without a measurement gap, an inter-frequency SSB-based measurement with NCSG, and an inter-frequency SSB-based measurement with a measurement gap is described in the following portions in the current standard.
Inter-frequency SSB-based measurement without measurement gap: TS 38.133 clause 9.3.5.3 (in brief, when a condition is satisfied, a scheduling restriction is imposed on an SSB symbol measured in the SMTC window or all symbols in the SMTC window)
Inter-frequency SSB-based measurement with NCSG: TS 38.133 clause 9.2.10.3 (in brief, when a condition is satisfied, a scheduling restriction is imposed on a union of SSB symbols measured in the SMTC window for all measurement occasions (MOs) or a union of all symbols in the SMTC window for all MOs)
Inter-frequency SSB-based measurement with measurement gap: TS 38.133 clause 9.1.2

Regarding the intra-frequency CSI-RS measurement, a scheduling restriction (terminal operation restriction) related to an intra-frequency CSI-RS measurement without a measurement gap is described in the following portions in the current standard.
Intra-frequency CSI-RS measurement without measurement gap: TS 38.133 clause 9.10.2.6 (in brief, when a condition is satisfied, a scheduling restriction is imposed on a configured CSI-RS symbol)

Regarding the inter-frequency CSI-RS measurement, a scheduling restriction (terminal operation restriction) related to an inter-frequency CSI-RS measurement with a measurement gap is described in the following portions in the current standard.
Inter-frequency CSI-RS measurement with measurement gap: TS 38.133 clause 9.1.2

When the SMTC window or the measurement gap overlaps with the transmission and reception of the signal related to the XR traffic due to the periodicity of the XR traffic, a problem may occur that the signal cannot be scheduled, and the capacity loss occurs due to the scheduling restriction associated with the measurement.

Meanwhile, the terminal may perform measurement for radio link monitoring, measurement for L1-RSRP, measurement for beam failure detection, and the like.

The above-described problem may occur in the CSI-RS measurement and in various measurements including these measurements. In addition, the above-described problem may occur in the transmission and reception of a signal other than the signal related to the XR traffic.

Currently, enhancements for the scheduling restriction are being studied, but a specific operation related to control for realizing the enhancements has not been sufficiently studied.

Therefore, hereinafter, a proposal (a proposal for relaxing the scheduling restriction related to the measurement) for reducing the influence caused by the scheduling restriction related to the measurement will be described.

More specifically, the present proposal includes the following proposals 1 to 6:
Proposal 1: Support for the terminal to prioritize transmission/reception of a channel/signal over RRM measurement based on one or more certain conditions
Proposal 2: Support for the base station to indicate skipping or disabling the measurement gap
Proposal 3: Support for the terminal to report a request/indication for skipping or disabling the measurement gap
Proposal 4: Support for periodic/semi-persistent/aperiodic measurement gap
Proposal 5: Support for the base station to indicate skipping or disabling the RRM measurement
Proposal 6: Support for the terminal to report a request/indication for skipping or disabling the RRM measurement

Hereinafter, Proposals 1 to 3 will be described assuming that the measurement gap is periodic. For example, the measurement gap (configuration) may be configured by an (new) information element similar to an existing measurement gap configuration information element (for example, MeasGapConfig IE) that is an RRC parameter or the information element. The periodicity of the measurement gap may be configured in such an information element.

Proposals 1, 5, and 6 may be applicable to any measurement (for example, RRM measurement), including the intra-frequency SSB and/or CSI-RS measurement with and/or without the measurement gap and the inter-frequency SSB and/or CSI-RS measurement. On the other hand, Proposals 2, 3, and 4 may be applicable to only the intra-frequency SSB and/or CSI-RS measurement with the measurement gap and the inter-frequency SSB and/or CSI-RS measurement.

The matters described in Proposals 1 to 6 may be appropriately combined as long as there is no contradiction.

In the present application, the notation "/" may mean "and/or" unless otherwise specified.

In addition, in the present application, the expression "not receiving/transmitting" may be replaced with "not assuming receiving/transmitting," "disabling receiving/transmitting," "not performing receiving/transmitting," "restricting receiving/transmitting," "assuming that receiving/transmitting is not possible," or the like.

In addition, in the present application, the expression "disable" may be replaced with the expression such as "disable," "turn off," or "set to an invalid (disabled) state (disabled state, off state)," and the expression "enable" may be replaced with the expression such as "enable," "turn on," or "set to an enabled state (disabled state, off state)."

In addition, in the present application, the expression "indication" may be replaced with the expression "instruction."

In addition, in the present application, the signals such as the SSB and the CSI-RS used for the measurement of the received power, the reception quality, and the like may be referred to as a measurement signal or the like.

In addition, in the present application, "skip or disable ..." may be considered as "not perform measurement (for example, RRM measurement) in ...," "assume that the scheduling restriction is not applied in ... (not assume that the scheduling restriction is applied)" or the like.

### <Proposal 1>

Hereinafter, the support (proposal 1) for the terminal to prioritize transmission/reception of a channel/signal over RRM measurement based on one or more certain conditions will be described. The processing related to prioritizing the transmission/reception of the channel/signal over the RRM measurement and/or prioritizing any one of the RRM measurement and/or the transmission/reception of the channel/signal may be referred to as prioritizing processing or the like.

One or more certain conditions for prioritizing the transmission/reception of the channel/signal over the RRM measurement may be configured according to the following option 1/2.

### [Option 1]

The one or more certain conditions may be a predefined condition. For example, a predetermined rule as the predefined condition may define when and which signal/channel (transmission/reception) may be prioritized over the RRM measurement (with or without the measurement gap). Such a condition/rule may be predetermined in the standard. In Option 1, terminal 200 may determine whether to perform the reception/transmission of the DL/UL channel/signal or to perform the RRM measurement based on the predefined condition (for example, in the measurement gap/SMTC window).

As an example of Option 1, when there is a DL/UL channel/signal received/transmitted on one or more certain CCs, the DL/UL channel/signal overlaps with the measurement gap or overlaps with the SMTC window (SSB symbol measured in the SMTC window) or overlaps with the CSI-RS symbol measured for the RRM measurement, and one or more of the following conditions A1 to A9 are satisfied, terminal 200 performs the reception/transmission of the DL/UL channel/signal and does not perform the RRM measurement (for example, in the measurement gap/SMTC window).
Condition A1: The DL/UL channel/signal is a specific channel/signal type (for example, PDCCH, PDSCH, CSI-RS, PUCCH, PUSCH, or sounding reference signal (SRS))
Condition A2: The DL/UL channel/signal is scheduled/triggered (or activated by DCI or configured by RRC) by DCI or is scheduled/triggered by a specific DCI format
Condition A3: The DL/UL channel/signal has a low physical layer priority value ("0") or a high physical layer priority value ("1") (introduced in Release 16)
Condition A4: The DL/UL channel/signal is aperiodic/semi-persistent/periodic
Condition A5: The DL/UL channel/signal is for a specific service type (for example, for XR, for URLLC, or for eMBB)
Condition A6: The communication is performed in a specific scenario (for example, performed in TN/NTN, performed in FR1/FR2, performed in a licensed band/unlicensed band, performed in FDD/TDD, or the like)
Condition A7: The RRM measurement is with or without a measurement gap
Condition A8: The RRM measurement or the measurement gap is for intra-frequency measurement or for inter-frequency measurement
Condition A9: The RRM measurement is based on the SSB-based measurement or the CSI-RS measurement

On the contrary, in a case other than the above, terminal 200 performs the RRM measurement (for example, in the measurement gap/SMTC window) and does not receive/transmit the DL/UL channel/signal.

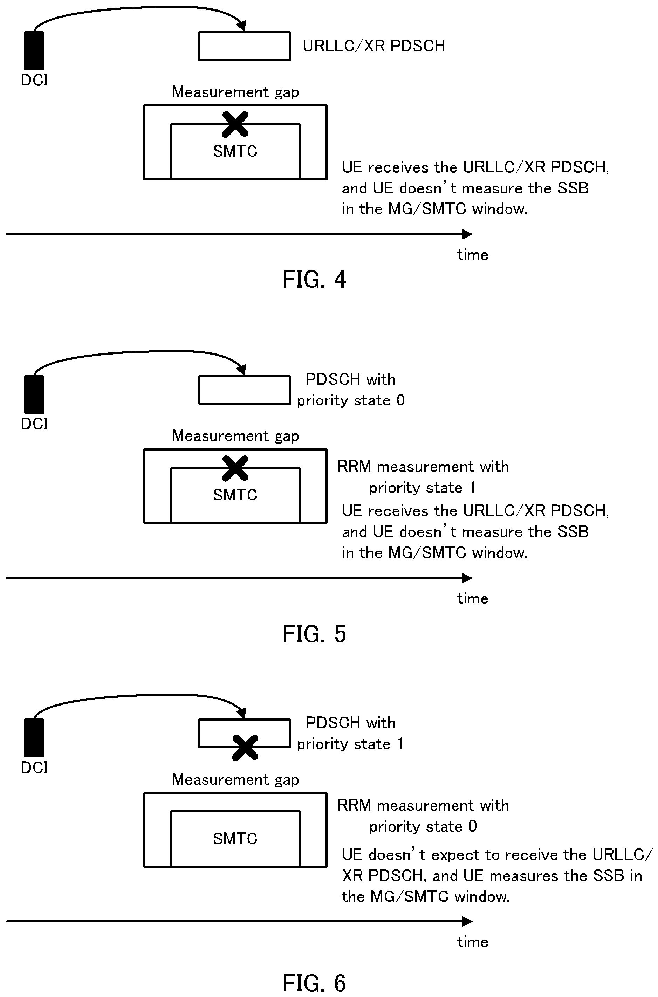

FIG. 4 shows an example in which the condition A5 is satisfied among the conditions A1 to A9. As shown in FIG. 4, when the PDSCH scheduled by the DCI is for URLLC/XR (URLLC/XR PDSCH) and the condition A5 is specifically "the DL/UL channel/signal is for URLLC/XR," terminal 200 receives the URLLC/XR PDSCH and does not measure the SSB in the measurement gap/SMTC window.

### [Variation of Example of Option 1]

The one or more certain CCs (or carriers) described above may be defined by the standard (for example, may be a primary cell (Pcell)/ primary secondary cell (Pscell)/secondary cell (Scell)), may be configured by the RRC (for example, a list of the CCs may be configured, or the prioritizing processing may be enabled/disabled for each CC), or may be one or more CCs in a specific frequency range (for example, FR1/FR2).

### [Option 2]

The one or more certain conditions may be based on a priority state value or a priority value. The priority state value or the priority value (hereinafter, simply referred to as the priority state value) may be referred to as information or a value indicating a priority or a priority order. In Option 2, terminal 200 may determine whether to prioritize the transmission/reception of the DL/UL channel/signal or to prioritize the RRM measurement (and/or the measurement gap) based on the priority state value of the DL/UL channel/signal and/or the RRM measurement (and/or the measurement gap) (for example, in the measurement gap/SMTC window).

As an example (example 1) of Option 2, terminal 200 may determine whether to prioritize the transmission/reception of the DL/UL channel/signal or to prioritize the RRM measurement based on the priority state value of the DL/UL channel/signal and the measurement gap. More specifically, when there is a DL/UL channel/signal received/transmitted on one or more certain CCs, the DL/UL channel/signal overlaps with the measurement gap, and the priority state value of the DL/UL channel/signal is larger (or smaller) than the priority state value of the measurement gap, terminal 200 performs the reception/transmission of the DL/UL channel/signal and does not perform the RRM measurement in the measurement gap, and in a case other than the above, terminal 200 needs to perform the RRM measurement in the measurement gap and does not receive/transmit the DL/UL channel/signal.

As another example (example 2) of Option 2, terminal 200 may determine whether to prioritize the transmission/reception of the DL/UL channel/signal or to prioritize the RRM measurement based on the priority state value of the DL/UL channel/signal and the RRM measurement. More specifically, when there is a DL/UL channel/signal received/transmitted on one or more certain CCs, the DL/UL channel/signal overlaps with the SMTC window (SSB symbol measured in the SMTC window) or overlaps with the CSI-RS symbol measured for the RRM measurement, and the priority state value of the DL/UL channel/signal is larger (or smaller) than the priority state value of the RRM measurement, terminal 200 performs the reception/transmission of the DL/UL channel/signal and does not perform the RRM measurement, and in a case other than the above, terminal 200 needs to perform the RRM measurement and does not receive/transmit the DL/UL channel/signal.

FIG. 5 shows an example of determining whether to prioritize the transmission/reception of the DL/UL channel/signal or to prioritize the RRM measurement based on the priority state value of the DL/UL channel/signal and the RRM measurement. As shown in FIG. 5, when the URLLC/XR PDSCH scheduled by the DCI has a priority state value "0" (high priority state value) and the RRM measurement has a priority state value "1" (low priority state value), terminal 200 receives the URLLC/XR PDSCH and does not measure the SSB in the measurement gap/SMTC window.

FIG. 6 shows another example of determining whether to prioritize the transmission/reception of the DL/UL channel/signal or to prioritize the RRM measurement based on the priority state value of the DL/UL channel/signal and the RRM measurement. As shown in FIG. 6, when the URLLC/XR PDSCH scheduled by the DCI has a priority state value "1" (low priority state value) and the RRM measurement has a priority state value "0" (high priority state value), terminal 200 does not receive the URLLC/XR PDSCH and measures the SSB in the measurement gap/SMTC window.

The priority state values of the DL/UL channel/signal and/or the RRM measurement and/or the measurement gap may be determined by the definition of the standard (for example, a priority state value X for a certain channel/signal) and/or by the indication from base station 100 (for example, RRC configuration/DCI indication/MAC CE indication), and/or may be determined by the capability (UE capability) of terminal 200. When the priority state value is determined by the definition of the standard, different priority state values may be defined for different conditions as in the conditions A1/A2/A3/A4/A5 proposed in the example of Option 1 described above. For example, the priority state value may be defined for each condition.

### [Variation of Example of Option 2]

For each of the examples (example 1 and example 2) described above, the one or more certain CCs (or carriers) may be defined by the standard (for example, may be a Pcell/Pscell/Scell), may be configured by the RRC (for example, a list of the CCs may be configured, or the prioritizing processing may be enabled/disabled for each CC), or may be one or more CCs in a specific frequency range (for example, FR1/FR2).

### [Variation of Proposal 1]

Whether or not the prioritizing processing is enabled may be defined by the standard (for example, is always enabled (is in an enabled state)), may be configured by the RRC, or may be determined based on the capability of terminal 200.

Proposal 1 may be applied to the intra-frequency SSB/CSI-RS measurement/inter-frequency SSB/CSI-RS measurement with the measurement gap and/or the intra-frequency SSB/CSI-RS measurement/inter-frequency SSB/CSI-RS measurement without the measurement gap.

In the present application, the measurement gap, the SMTC window, the SSB symbol, the CSI-RS symbol, and the like may be referred to as a period or an interval associated with the measurement.

### <Exemplary Operation>

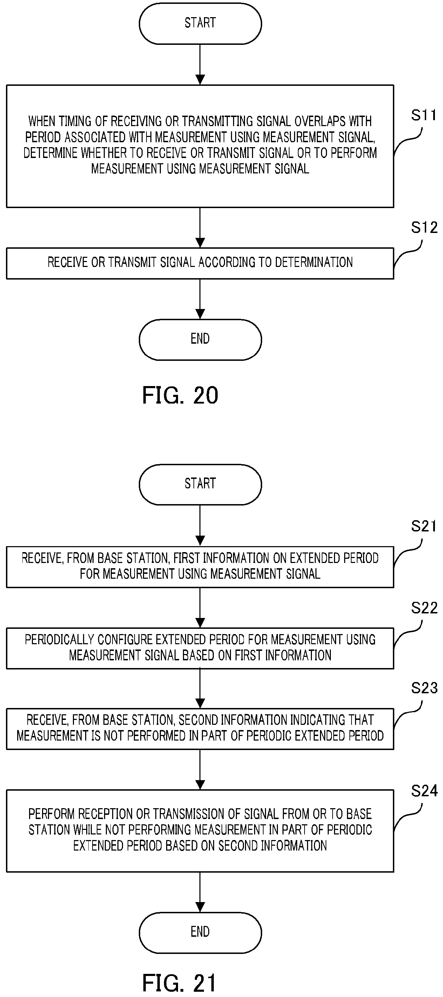

Next, the exemplary operation of terminal 200 will be described with reference to FIG. 20.

In step S11, terminal 200 determines whether to receive or transmit the signal (/channel) or to perform the measurement using the measurement signal when the timing of receiving or transmitting the signal (/channel) overlaps with the period associated with the measurement using the measurement signal.

In step S12, terminal 200 receives or transmits the signal (channel) at the above timing in accordance with the determination in step S11.

The processing of steps S11 and S12 may be considered to correspond to prioritizing the transmission/reception of the channel/signal over the RRM measurement based on one or more certain conditions as described above.

According to Proposal 1, the transmission/reception of the channel/signal can be prioritized over the RRM measurement based on the condition, so that the influence caused by the scheduling restriction related to the measurement can be reduced.

### <Proposal 2>

As Proposal 2, the support for the indication by the base station for skipping or disabling the measurement gap will be described.

The operation of terminal 200 related to skipping or disabling the measurement gap may be based on the indication from base station 100.

For example, when terminal 200 is indicated by base station 100 to skip or disable the measurement gap occasion, terminal 200 may not perform the RRM measurement (and/or positioning reference signal (PRS) measurement) in the measurement gap occasion and may receive/transmit the DL/UL channel/signal in the measurement gap occasion.

Skipping or disabling the measurement gap occasion may be indicated according to the following Alt 1/2.

### [Alt 1]

Skipping or disabling the measurement gap occasion may be indicated by a semi-static indication by the RRC or the SIB. For example, the RRC may configure the measurement gap skipping pattern, or the SIB may indicate the measurement gap skipping pattern. When a plurality of measurement gap configurations are configured, the measurement gap skipping pattern may be common to all the plurality of measurement gap configurations or may be configured/notified for each measurement gap configuration. The semi-static indication by the RRC or the SIB may be referred to as information indicating that the measurement is not performed (in a part of the periodic extended period for the measurement). Terminal 200 may be indicated to skip or disable the measurement gap occasion by receiving the semi-static indication from base station 100, and may determine the measurement gap occasion to be skipped and/or the measurement gap occasion not to be skipped based on the semi-static indication.

The measurement gap occasion configured/indicated to be not skipped is not skipped, and terminal 200 needs to perform the RRM measurement in the measurement gap occasion not to be skipped, and the scheduling restriction defined in the current standard is applied in the measurement gap occasion not to be skipped. In the measurement gap occasion configured/indicated to be skipped, terminal 200 may not perform the RRM measurement and may receive/transmit the DL/UL channel/signal.

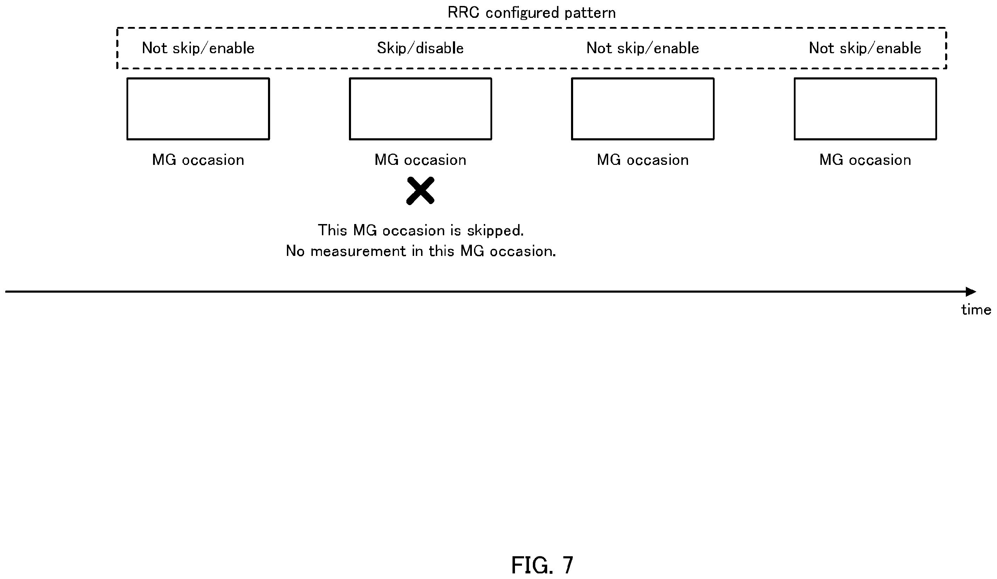

FIG. 7 shows an exemplary indication of the skip of the measurement gap occasion based on the Alt 1. As shown in FIG. 7, when the measurement gap skipping patterns configured for the measurement gap configuration are "Not skip/enable," "Skip/disable," "Not skip/enable," and "Not skip/enable," the first measurement gap occasion among the measurement gap occasions is configured to be not skipped (enabled), the second measurement gap occasion is configured to be skipped (disabled), the third measurement gap occasion is configured to be not skipped (enabled), and the fourth measurement gap occasion is configured to be not skipped (enabled). Therefore, terminal 200 may determine to skip the second measurement gap occasion, and terminal 200 may not perform the RRM measurement in the second measurement gap and may receive/transmit the DL/UL channel/signal.

### [Alt 2]

The skip or disable of the measurement gap occasion may be indicated by a dynamic indication by the DCI or the MAC CE. The dynamic indication by the DCI or the MAC CE may be referred to as information indicating that the measurement is not performed (in a part of the periodic extended period for the measurement). Terminal 200 may be indicated to skip or disable the measurement gap occasion by receiving the dynamic indication from base station 100, and may determine the measurement gap occasion to be skipped and the measurement gap occasion not to be skipped based on the dynamic indication. The dynamic indication by the DCI or the MAC CE may be in accordance with the following Alt 2-1/2-2/2-3/2-4.

### · Alt 2-1

The DCI or the MAC CE may indicate the skip of N (N is an integer of 1 or more) consecutive measurement gap occasions.

As an example of the Alt 2-1, the first measurement gap occasion to be skipped may be the first measurement gap occasion that is X symbols/slots after the last symbol/slot of the DCI (or the HARQ-ACK for the PDSCH corresponding to (or including) the MAC CE for the indication) for the indication. As described above, terminal 200 may determine the first measurement gap occasion to be skipped based on the DCI/MAC CE. The value of X may be defined by the standard, may be configured by the RRC, or may be indicated by the DCI/MAC CE for the indication.

In addition, the value of N may be defined by the standard (for example, N = 1), may be configured by the RRC, or may be indicated by the DCI/MAC CE for the indication.

The measurement gap occasion not included in the N consecutive measurement gap occasions is not skipped, and terminal 200 needs to perform the RRM measurement in the measurement gap occasion not to be skipped, and the scheduling restriction defined in the current standard is applied in the measurement gap occasion not to be skipped. In the N consecutive measurement gap occasions, terminal 200 may not perform the RRM measurement and may receive/transmit the DL/UL channel/signal.

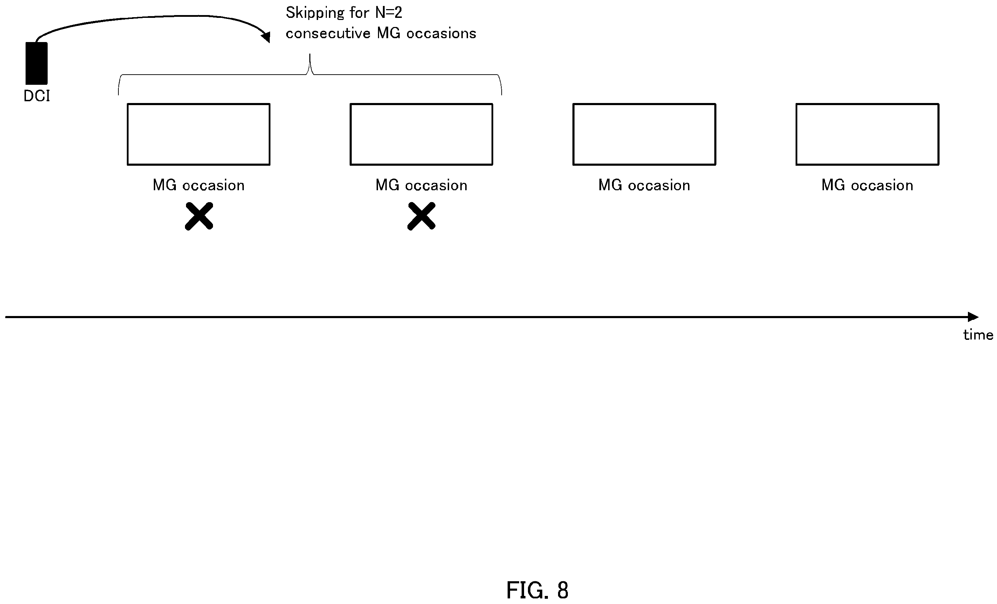

FIG. 8 shows an example of the indication of the skip of the measurement gap occasion based on the Alt 2-1, in which the DCI indicates the skip of N (in the example shown in FIG. 8, N = 2) consecutive measurement gap occasions. In this example, the first measurement gap occasion and the second measurement gap occasion are skipped. Therefore, terminal 200 may determine to skip the first measurement gap occasion and the second measurement gap occasion shown in FIG. 8, and may not perform the RRM measurement in these measurement gap occasions and may receive/transmit the DL/UL channel/signal.

### · Alt 2-2

The DCI or the MAC CE may indicate the skip of the measurement gap occasion in the skipping window. The skipping window may be referred to as a no-measurement period, a period in which the measurement is not performed, or the like.

As an example of the Alt 2-2, the start of the skipping window may be X symbols/slots after the last symbol/slot of the DCI (or the HARQ-ACK for the PDSCH corresponding to the MAC CE for the indication) for the indication. As described above, terminal 200 may determine the start of the skipping window based on the DCI/MAC CE. The value of X may be defined by the standard, may be configured by the RRC, or may be indicated by the DCI/MAC CE for the indication.

In addition, the length of the skipping window may be defined by the standard, may be configured by the RRC, or may be indicated by the DCI/MAC CE for the indication.

The measurement gap occasion not included in the skipping window is not skipped, and terminal 200 needs to perform the RRM measurement in the measurement gap occasion not to be skipped, and the scheduling restriction defined in the current standard is applied in the measurement gap occasion not to be skipped. In the measurement gap occasion included in the skipping window, terminal 200 may not perform the RRM measurement and may receive/transmit the DL/UL channel/signal.

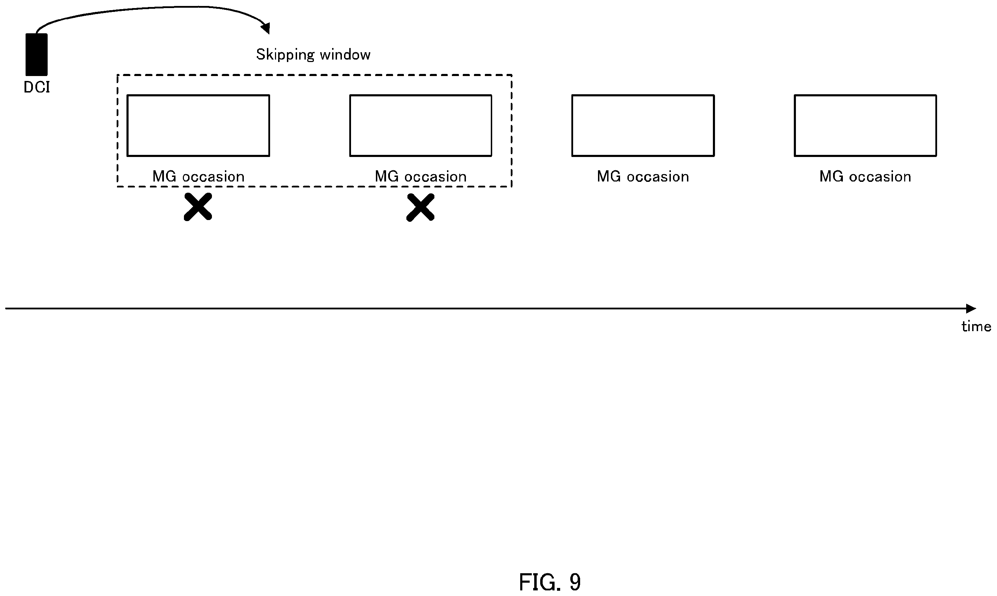

FIG. 9 shows an example of the indication of the skip of the measurement gap occasion based on the Alt 2-2, in which the DCI indicates the skip of the measurement gap occasion included in the skipping window. In this example, the first measurement gap occasion and the second measurement gap occasion shown in FIG. 9 are skipped. Therefore, terminal 200 may determine to skip the first measurement gap occasion and the second measurement gap occasion shown in FIG. 9, and may not perform the RRM measurement in these measurement gap occasions and may receive/transmit the DL/UL channel/signal.

### · Alt 2-3

The DCI or the MAC CE may indicate whether or not to skip each of N (N is an integer of 1 or more) consecutive measurement gap occasions.

As an example of the Alt 2-3, the DCI or the MAC CE may indicate (or include) a bitmap in which each bit indicates whether or not to skip a corresponding measurement gap occasion from among the indicated N consecutive measurement gap occasions. The bit value "0" may indicate "not skip (not to be skipped)," and the bit value "1" may indicate "skip (to be skipped)," or the bit value "1" may indicate "not skip (not to be skipped)," and the bit value "0" may indicate "skip (to be skipped)." For the measurement gap occasion indicated to be "skipped," terminal 200 may not perform the RRM measurement in the measurement gap occasion, the scheduling restriction defined in the current standard may not be applied, and may receive/transmit the DL/UL channel/signal. On the other hand, for the measurement gap occasion indicated to be "not skipped," terminal 200 needs to perform the RRM measurement in the measurement gap occasion, and the scheduling restriction defined in the current standard is applied in the measurement gap occasion not to be skipped.

The first measurement gap occasion among the N consecutive measurement gap occasions may be determined to be the first measurement gap occasion that is X symbols/slots after the last symbol/slot of the DCI (or the HARQ-ACK for the PDSCH corresponding to the MAC CE for the indication) for the indication. As described above, terminal 200 may determine the first measurement gap occasion to be skipped based on the DCI/MAC CE. The value of X may be defined by the standard, may be configured by the RRC, or may be indicated by the DCI/MAC CE for the indication.

In addition, the value of N may be defined by the standard, may be configured by the RRC, or may be indicated by the DCI/MAC CE for the indication.

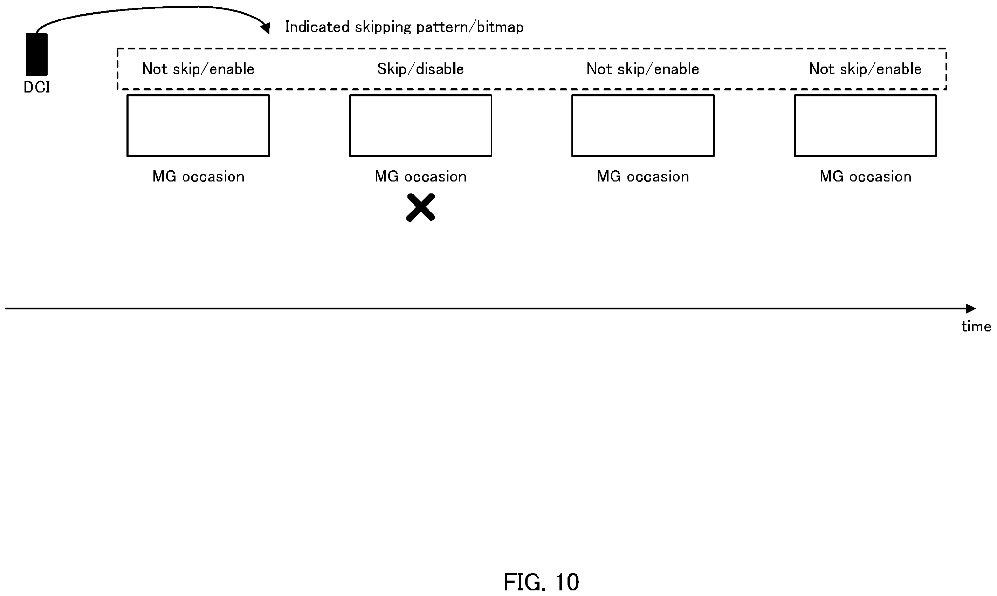

FIG. 10 shows an example of the indication of the skip of the measurement gap occasion based on the Alt 2-3, in which the DCI indicates the skip pattern of N (in the example shown in FIG. 10, N = 4) consecutive measurement gap occasions by the bitmap. In this example, the bitmap (skip pattern) is "0100" (in this example, 0: not skipped, 1: skipped), and the second measurement gap occasion shown in FIG. 10 is skipped. Therefore, terminal 200 may determine to skip the second measurement gap occasion shown in FIG. 10, may not perform the RRM measurement in this measurement gap occasion, and may receive/transmit the DL/UL channel/signal.

### · Alt 2-4

The DCI or the MAC CE may indicate to terminal 200 that the configured measurement gap is disabled until terminal 200 receives another DCI or MAC CE for enabling the measurement gap. In other words, when terminal 200 receives the DCI or the MAC CE for disabling the measurement gap, terminal 200 may continue the disablement (state) of the measurement gap until terminal 200 receives another DCI or MAC CE for enabling the measurement gap. The DCI or the MAC CE for disabling the measurement gap may be referred to as information indicating that the measurement is performed (in a (different) part of the periodic extended period for the measurement).

As an example of the Alt 2-4, when terminal 200 detects or receives the DCI or the MAC CE from base station 100 for indicating the disablement of the measurement gap, terminal 200 may determine to disable the measurement gap occasion that is X symbols/slots after the last symbol/slot of the DCI (or the HARQ-ACK for the PDSCH corresponding to the MAC CE for the indication) for the indication. The value of X may be defined by the standard, may be configured by the RRC, or may be indicated by the DCI/MAC CE for the indication.

When a plurality of measurement gaps or measurement gap configurations are configured, the DCI or the MAC CE may indicate the disablement of all the plurality of configured measurement gaps or measurement gap configurations, or may indicate the disablement of a certain measurement gap or measurement gap configuration among the plurality of configured measurement gaps or measurement gap configurations. For example, when the DCI or the MAC CE indicates the disablement of a certain measurement gap or measurement gap configuration, the DCI or the MAC CE may also indicate the corresponding measurement gap (configuration) ID (or index) or FR.

When the measurement gap is disabled and terminal 200 detects or receives the (another) DCI or the MAC CE from base station 100 for indicating the enablement of the measurement gap, terminal 200 may determine to enable the measurement gap occasion starting Y symbols/slots after the last symbol/slot of the (another) DCI (or the HARQ-ACK for the PDSCH corresponding to the (another) MAC CE for the indication) for the indication. The value of Y may be defined by the standard, may be configured by the RRC, or may be indicated by the (another) DCI/MAC CE for the indication.

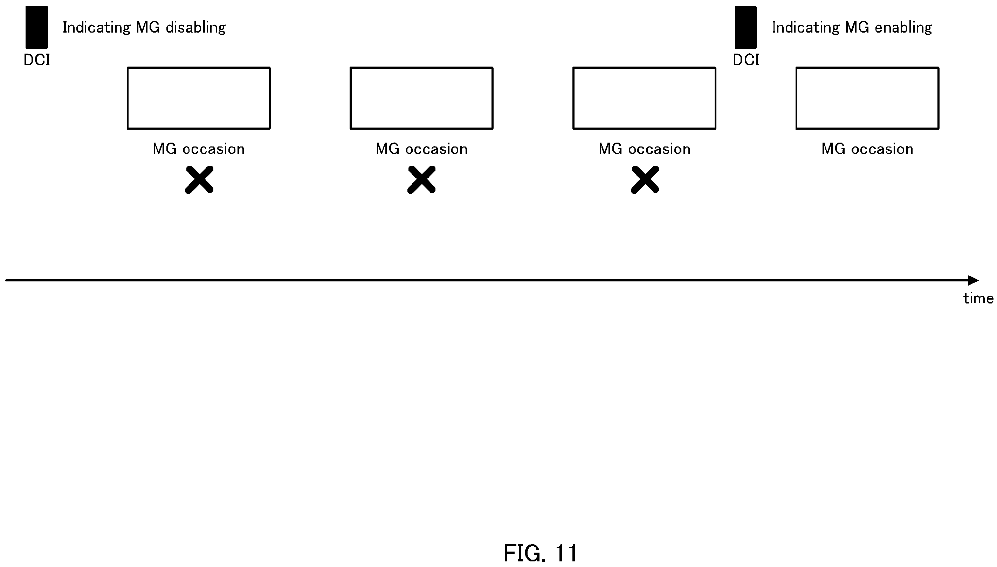

FIG. 11 shows an example of the indication of the skip of the measurement gap based on the Alt 2-4, in which the DCI indicates the disablement of the measurement gap, and then another DCI indicates the enablement of the measurement gap. In this example, the DCI indicates the disablement of the measurement gap before the first measurement gap occasion shown in FIG. 11. As a result, the subsequent measurement gap occasions satisfying the above-described condition are disabled/skipped. In this example, the first measurement gap occasion to the third measurement gap occasion before the reception of another DCI is skipped. After the third measurement gap occasion, another DCI indicates the enablement of the measurement gap. As a result, the subsequent measurement gap occasions are enabled/not skipped (until another DCI indicates the disablement of the measurement gap). Therefore, terminal 200 may determine to skip the first measurement gap occasion to the third measurement gap occasion shown in FIG. 11, may not perform the RRM measurement in these measurement gap occasions, and may receive/transmit the DL/UL channel/signal. On the other hand, terminal 200 may determine not to skip the last measurement gap occasion shown in FIG. 11, may need to perform the RRM measurement in this measurement gap occasion, and may apply the scheduling restriction defined in the current standard in the measurement gap occasion not to be skipped.

### · Variation of Alt 2-1/2-2/2-3/2-4

The dynamic indication by the DCI or the MAC CE may be applied only to one or more specific measurement gap types (for example, FR1 measurement gap or FR2 measurement gap), or may be applied only to the measurement gap for each terminal (per UE measurement gap).

In addition, when a plurality of measurement gap configurations are configured, the following options a/b may be adopted.

### ·· Option a

The dynamic indication by the DCI or the MAC CE may be indicated for all the plurality of measurement gap configurations. That is, the dynamic indication by the DCI or the MAC CE may be a common indication for the plurality of measurement gap configurations.

### ·· Option b

The dynamic indication by the DCI or the MAC CE may be indicated for each measurement gap configuration. That is, the target measurement gap configuration also needs to be indicated in the dynamic indication by the DCI or the MAC CE.

In the present application, the measurement gap (occasion) may be referred to as an extended period or interval for measurement.

### <Exemplary Operation>

Next, the exemplary operation of terminal 200 will be described with reference to FIG. 21.

In step S21, terminal 200 receives first information related to the extended period for the measurement using the measurement signal from base station 100. For example, the first information may be an existing measurement gap configuration information element (for example, MeasGapConfig IE) that is an RRC parameter or the same (new) information element as the information element.

In step S22, terminal 200 periodically configures the extended period for the measurement using the measurement signal based on the received first information.

In step S23, terminal 200 receives second information indicating that the measurement is not performed in a part of the periodic extended period from base station 100. For example, the second information may be the semi-static indication described in the Alt 1 or the dynamic indication described in the Alt 2.

In step S24, terminal 200 does not perform the measurement in a part of the periodic extended period based on the received second information, and performs the reception or transmission of the signal from or to the base station.

According to Proposal 2, the measurement gap (occasion) can be skipped or disabled based on the semi-static indication/dynamic indication from the base station, so that the influence caused by the scheduling restriction related to the measurement can be reduced.

### <Proposal 3>

As Proposal 3, the support for the terminal to report the request/indication for skipping or disabling the measurement gap will be described.

Terminal 200 may report the request/indication for skipping or disabling the measurement gap to base station 100 via the UCI/MAC CE on the PUCCH/PUSCH. In a case of using the PUCCH/PUSCH, the PUCCH/PUSCH resource for terminal 200 to report the request/indication for skipping or disabling the measurement gap may be configured by the RRC or may be indicated by the scheduling DCI. The request/indication for skipping or disabling the measurement gap may be referred to as information indicating that the measurement is not performed (in a part of the periodic extended period for the measurement).

The report of the request/indication for skipping or disabling the measurement gap may be periodic and/or semi-persistent and/or aperiodic and/or may be triggered by an event. When such a report is triggered by an event, the event may be, for example, an event indicating a situation in which the measurement does not need to be performed. For example, the event may be that there are a predetermined number of measurement periods in which the measured reception quality of the measurement signal (SSB or the like) is within a predetermined range in a plurality of consecutive measurement periods (SMTC windows or the like), that the measurement periods in which the measured reception quality of the measurement signal is within a predetermined range continue for a predetermined number of times continuously, or the like.

The report content and the report procedure may be in accordance with the following options 1/2/3.

### [Option 1]

Terminal 200 may report the request that triggers the skip or disablement of the measurement gap to base station 100. Terminal 200 may expect to monitor/receive the indication from base station 100 for skipping or disabling the measurement gap after reporting the request to base station 100 (base station 100 transmits the indication). In Option 1, how to skip the measurement gap may depend on the indication from base station 100. That is, base station 100 may indicate, to terminal 200, how to skip the measurement gap (how to skip the measurement gap may be indicated to terminal 200 by base station 100).

The indication from base station 100 of how to skip the measurement gap may be in accordance with the above-described proposal 2 (including Option, Alt 1/2 (Alt 2-1 to Alt 2-4)). That is, the operation of terminal 200 in a case of skipping the measurement gap occasion may be in accordance with the indication from base station 100 as described in the above-described proposal 2.

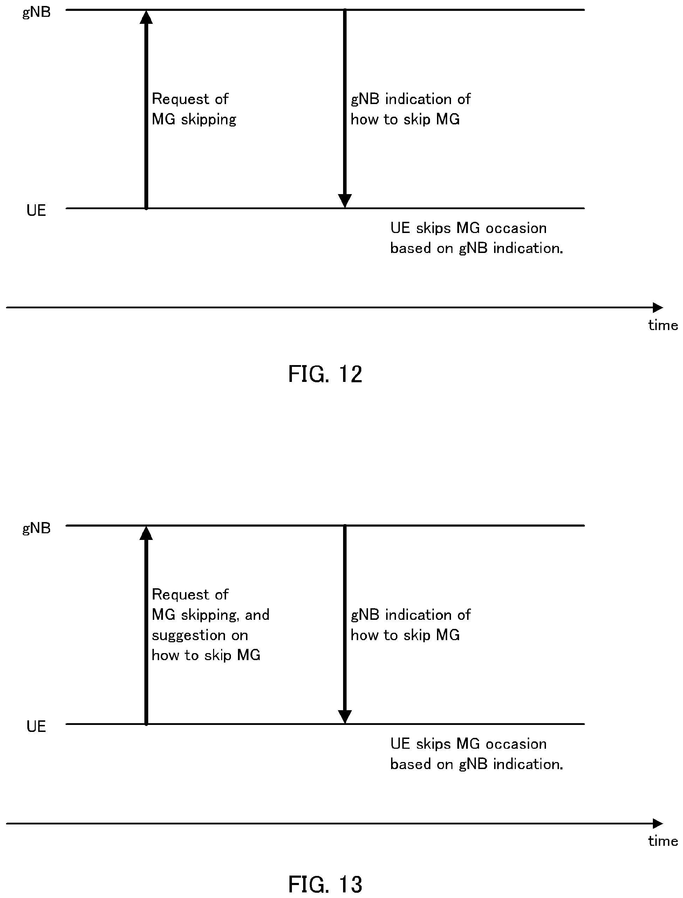

For example, as shown in FIG. 12, terminal 200 reports the request to base station 100, and then receives the indication from base station 100 of how to skip the measurement gap. Then, terminal 200 skips the measurement gap occasion based on the indication from base station 100.

### [Option 2]

Terminal 200 may report the request for skipping or disabling the measurement gap and information related to the requested/suggested skipping occasion (measurement gap occasion to be skipped) to base station 100. In this case, terminal 200 also requests/suggests the measurement gap occasion to be skipped.

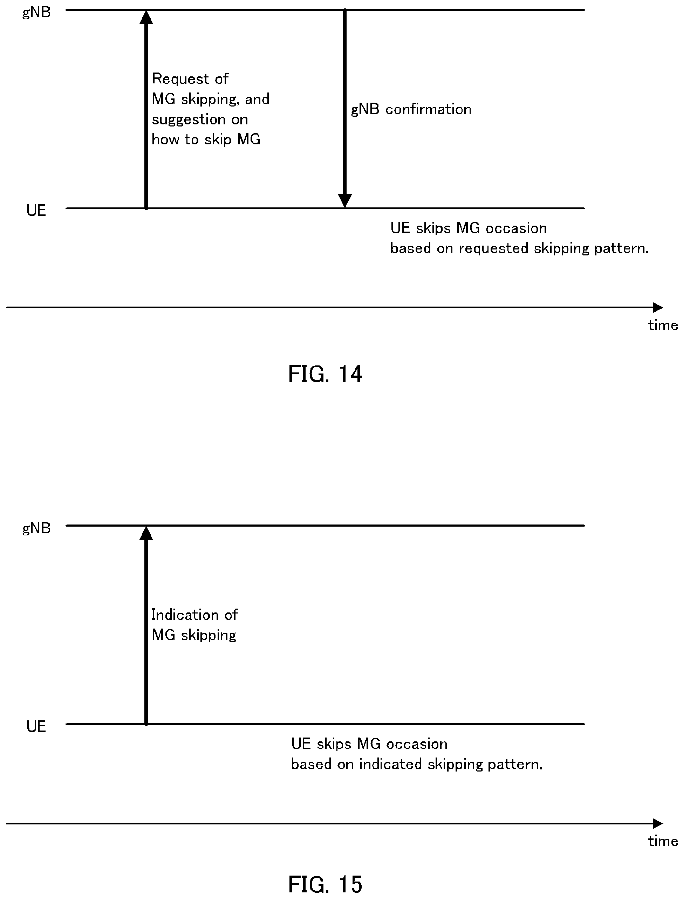

In Option 2, the indication from base station 100 of how to skip the measurement gap or confirmation from base station 100 to confirm (accept, approve) the request for skipping or disabling the measurement gap is necessary. In the former case, terminal 200 skips the measurement gap occasion according to the indication from base station 100, and in the latter case, terminal 200 skips the measurement gap occasion as requested/suggested by terminal 200. This will be described later with reference to FIGS. 13 and 14.

The content of the request by terminal 200 may include one or more of the following options 2-a to 2-d.

### · Option 2-a: Skip of N (N is an integer of 1 or more) consecutive measurement gap occasions

The first measurement gap occasion to be skipped may be the first measurement gap occasion that is X symbols/slots after the last symbol/slot of the request (for example, PUCCH/PUSCH/MAC CE corresponding to the request). As described above, terminal 200 may determine the first measurement gap occasion to be skipped. The value of X may be defined by the standard, may be configured by the RRC, or may be indicated by the request.

In addition, the value of N may be defined by the standard (for example, N = 1), may be configured by the RRC, or may be indicated by the request.

### · Option 2-b: Skip of measurement gap occasion in skipping window

The start of the skipping window may be X symbols/slots after the last symbol/slot of the request (for example, PUCCH/PUSCH/MAC CE corresponding to the request). As described above, terminal 200 may determine the start of the skipping window. The value of X may be defined by the standard, may be configured by the RRC, or may be indicated by the request.

In addition, the length of the skipping window may be defined by the standard, may be configured by the RRC, or may be indicated by the request.

### · Option 2-c: Skip pattern related to whether or not to skip each of N (N is an integer of 1 or more) consecutive measurement gap occasions

The request may indicate (or include) a bitmap in which each bit indicates whether or not to skip a corresponding measurement gap occasion from among the indicated N consecutive measurement gap occasions. The bit value "0" may indicate "not skip (not to be skipped)," and the bit value "1" may indicate "skip (to be skipped)," or the bit value "1" may indicate "not skip (not to be skipped)," and the bit value "0" may indicate "skip (to be skipped)."

The first measurement gap occasion among the N consecutive measurement gap occasions may be the first measurement gap occasion that is X symbols/slots after the last symbol/slot of the request (for example, PUCCH/PUSCH/MAC CE corresponding to the request). As described above, terminal 200 may determine the first measurement gap occasion to be skipped. The value of X may be defined by the standard, may be configured by the RRC, or may be indicated by the request.

In addition, the value of N may be defined by the standard, may be configured by the RRC, or may be indicated by the request.
· Option 2-d: Disablement (leaving in a disabled state) of configured measurement gap until terminal 200 transmits request for enabling measurement gap may be indicated. The request for enabling the measurement gap may be referred to as information indicating that the measurement is performed (in a (different) part of the periodic extended period for the measurement).

Terminal 200 may determine to disable the measurement gap occasion starting X symbols/slots after the request (for example, PUCCH/PUSCH/MAC CE corresponding to the request). The value of X may be defined by the standard, may be configured by the RRC, or may be indicated by the DCI/MAC CE for the indication.

When the measurement gap is disabled and terminal 200 transmits a (another) request for enabling the measurement gap, terminal 200 may determine to enable the measurement gap occasion starting Y symbols/slots after the last symbol/slot of the (another) request (for example, PUCCH/PUSCH/MAC CE corresponding to the (another) request). The value of Y may be defined by the standard, may be configured by the RRC, or may be indicated by the (another) request.

### · Variation of Option 2-a/2-b/2-c/2-d

The content of the request by terminal 200 may be for one or more of the following Alt 1 to Alt 3.

### ·· Alt 1

The content of the request by terminal 200 may be for all measurement gap configurations/types.

### ·· Alt 2

The content of the request by terminal 200 may be for one or more specific measurement gap configurations, and one or more target measurement gap configurations may be included in the request.

### ·· Alt 3

The content of the request by terminal 200 may be for a specific measurement gap type (for example, measurement gap for each UE/FR, FR1/FR2 measurement gap, or the like).

The operation of terminal 200 after terminal 200 reports the request for skipping or disabling the measurement gap (for example, request according to Option 2-a/2-b/2-c/2-d) to base station 100 may be in accordance with the following options 2-1/2-2.

### · Option 2-1

Terminal 200 may expect to monitor/receive the indication from base station 100 for skipping or disabling the measurement gap (base station 100 transmits the indication). In Option 2-1, how to skip the measurement gap may depend on the indication from base station 100. That is, base station 100 may indicate, to terminal 200, how to skip the measurement gap (how to skip the measurement gap may be indicated to terminal 200 by base station 100).

The indication from base station 100 of how to skip the measurement gap may be in accordance with the above-described proposal 2 (including Option, Alt 1/2 (Alt 2-1 to Alt 2-4)). That is, the operation of terminal 200 in a case of skipping the measurement gap occasion may be in accordance with the indication from base station 100 as described in the above-described proposal 2.

For example, as shown in FIG. 13, terminal 200 transmits the request and the suggestion of how to skip the measurement gap to base station 100, and then receives the indication from base station 100 of how to skip the measurement gap. Then, terminal 200 skips the measurement gap occasion based on the indication from base station 100.

### · Option 2-2

Terminal 200 may expect to monitor/receive the confirmation of the request from base station 100 to skip or disable the measurement gap (base station 100 transmits the confirmation). When terminal 200 receives the confirmation (in a monitoring window), terminal 200 may skip the measurement gap occasion as requested. On the other hand, when terminal 200 cannot receive the confirmation (in the monitoring window), terminal 200 cannot skip the measurement gap occasion as requested.

The above-described monitoring window may be determined as follows. · The start of the monitoring window may be the first symbol/slot that is K symbols/slots after the request, or the first symbol/slot for the PDCCH monitoring after the request (for a specific search space type or a specific DCI format). · The length of the monitoring window may be defined by the standard, may be configured by the RRC, or may be reported in the request.

For example, as shown in FIG. 14, terminal 200 transmits the request and the suggestion of how to skip the measurement gap to base station 100, and then receives the confirmation from base station 100. Then, terminal 200 skips the measurement gap occasion as requested (suggested) (for example, based on the requested (suggested) skip pattern).

As a variation of Option 2-2, when the request by terminal 200 is for a plurality of measurement gap configurations/types, the confirmation of base station 100 may be in accordance with the following Alt 1/2.

Alt 1: The single confirmation may be applied only to the request for a plurality of measurement gap configurations/types.

Alt 2: Terminal 200 may expect (may receive) confirmation for each measurement gap configuration/type.

### [Option 3]

Terminal 200 may report the indication of the skip or disablement of the measurement gap occasion to base station 100. In Option 3, the indication from base station 100 of how to skip the measurement gap or confirmation from base station 100 to confirm (accept, approve) the request for skipping or disabling the measurement gap is not necessary, and terminal 200 may skip the measurement gap occasion as indicated by terminal 200.

The content of the indication by terminal 200 may include one or more of Options 2-a to 2-d (including the variation) of the above-described proposal 3. Here, in Options 2-a to 2-d of the above-described proposal 3, the "request" may be replaced with the "indication."

The operation of terminal 200 after terminal 200 reports the indication of the skip or disablement of the measurement gap (for example, indication according to Option 2-a/2-b/2-c/2-d of the above-described proposal 3) to base station 100 may be as follows.
· For the measurement gap occasion indicated to be "skipped/disabled," terminal 200 may not perform the RRM measurement in the measurement gap occasion, and the scheduling restriction defined in the current standard may not be applied (terminal 200 may receive/transmit the DL/UL channel/signal).
· For the measurement gap occasion indicated to be "not skipped/enabled," terminal 200 needs to perform the RRM measurement in the measurement gap occasion, and the scheduling restriction defined in the current standard is applied in the measurement gap occasion not to be skipped.

For example, as shown in FIG. 15, after sending the indication to base station 100, terminal 200 skips the measurement gap occasion as indicated (for example, based on the indicated skip pattern) without receiving any indication or confirmation from base station 100.

### [Variation of Options 1/2/3]

When a plurality of measurement gap configurations/types are present, terminal 200 may report the request/instruction to base station 100 without the details of the measurement gap configuration/type to be skipped or disabled by the request/indication (terminal 200 may report the request/indication to skip or disable the measurement gap to base station 100 for all the plurality of measurement gap configurations/types), or may also report the information on the target measurement gap configuration or the specific measurement gap type (for example, per UE/FR, FR1/FR2, or the like) intended to be skipped or disabled to base station 100.

In the present application, the measurement gap (occasion) may be referred to as an extended period or interval for measurement.

### <Exemplary Operation>

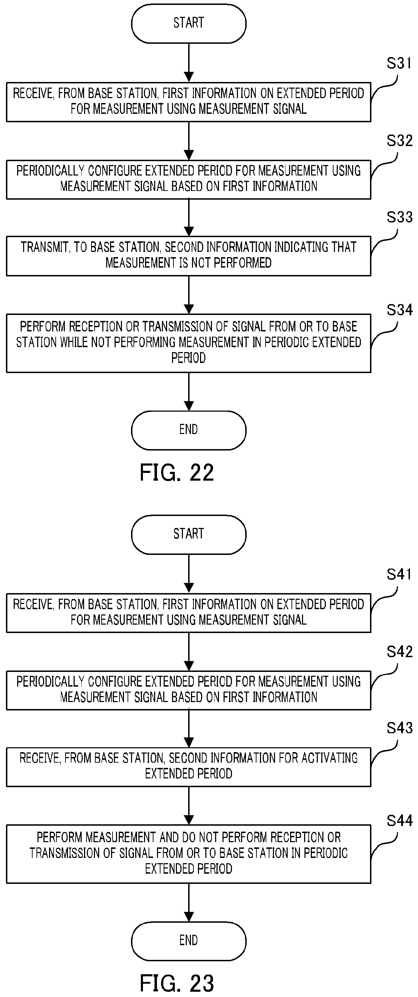

Next, the exemplary operation of terminal 200 will be described with reference to FIG. 22.

In step S31, terminal 200 receives first information related to the extended period for the measurement using the measurement signal from base station 100. For example, the first information may be an existing measurement gap configuration information element (for example, MeasGapConfig IE) that is an RRC parameter or the same (new) information element as the information element.

In step S32, terminal 200 periodically configures the extended period for the measurement using the measurement signal based on the received first information.

In step S33, terminal 200 transmits the second information indicating that the measurement is not performed to base station 100. For example, the second information may be the request described in Option 1/2 or the indication described in Option 3.

In step S34, terminal 200 does not perform the measurement in a part of the periodic extended period in response to the transmission of the second information in step S33, and performs the reception or transmission of the signal from or to the base station.

Between step S33 and step S34, base station 100 may transmit an indication to terminal 200 indicating how to skip the periodic extended period (information indicating that measurement is not performed during part of the periodic extended period) as described in Option 1/2-1, base station 100 may transmit a confirmation to terminal 200 that measurement is not performed during part of the periodic extended period as described in Option 2-2, or, exchange may not occur between terminal 200 and base station 100 as described in Option 3.

According to Proposal 3, the measurement gap (occasion) can be skipped or disabled in response to the request/indication from the terminal, so that the influence caused by the scheduling restriction related to the measurement can be reduced.

### <Proposal 4>

As Proposal 4, the support for the periodic/semi-persistent/aperiodic measurement gap will be described.

The above-described proposals 1 to 3 have been given above on the assumption that the measurement gap is periodic. However, the measurement gap is not limited to the periodic measurement gap. Specifically, the measurement gap may include a periodic measurement gap, a semi-persistent measurement gap, and an aperiodic measurement gap.

Regarding the periodic measurement gap, when the periodic measurement gap is configured once, the periodic measurement gap may always be enabled (may be in an enabled state). In this case, terminal 200 may receive the RRC parameter for configuring the periodic measurement gap from base station 100, and may perform the intra-frequency RRM measurement/inter-frequency RRM measurement in each configured measurement gap occasion. The RRC parameter may be, for example, an information element in which a parameter indicating a measurement gap type such as a periodic measurement gap, a semi-persistent measurement gap, and an aperiodic measurement gap is added to an existing RRM measurement configuration information element (for example, MeasGapConfig IE), or may be a (new) information element as the information element for the periodic measurement gap that is similar to the existing RRM measurement configuration information element.

Regarding the semi-persistent measurement gap, the semi-persistent measurement gap may be activated/deactivated by the DCI or the MAC CE for activation/deactivation. When terminal 200 receives the RRC parameter for configuring the semi-persistent measurement gap and detects or receives the DCI or the MAC CE for activating the measurement gap from base station 100 for the configured measurement gap (when the semi-persistent measurement gap is activated once), terminal 200 may perform the intra-frequency RRM measurement/inter-frequency RRM measurement in each measurement gap occasion (until the DCI or the MAC CE for deactivating the measurement gap is detected or received). In addition, when the semi-persistent measurement gap is activated once, the scheduling restriction defined in the existing standard may be applied. On the other hand, when terminal 200 detects or receives the DCI or the MAC CE for deactivating the measurement gap (when the semi-persistent measurement gap is deactivated once), terminal 200 may not perform the intra-frequency RRM measurement/inter-frequency RRM measurement in each measurement gap occasion (until the DCI or the MAC CE for activating the measurement gap is detected or received) and may receive/transmit the DL/UL channel/signal. The RRC parameter may be, for example, an information element in which a parameter indicating a measurement gap type such as a periodic measurement gap, a semi-persistent measurement gap, and an aperiodic measurement gap is added to an existing RRM measurement configuration information element (for example, MeasGapConfig IE), or may be the same (new) information element as the information element for the semi-persistent measurement gap.

Regarding the aperiodic measurement gap, the aperiodic measurement gap may be activated by the DCI or the MAC CE. When terminal 200 receives the RRC parameter for configuring the aperiodic measurement gap and detects or receives the activation DCI or the MAC CE for activating the configured measurement gap from base station 100 for the configured measurement gap (when the aperiodic measurement gap is activated), terminal 200 may perform the intra-frequency RRM measurement/inter-frequency RRM measurement in the indicated measurement gap occasion. The RRC parameter may be, for example, an information element in which a parameter indicating a measurement gap type such as a periodic measurement gap, a semi-persistent measurement gap, and an aperiodic measurement gap is added to an existing RRM measurement configuration information element (for example, MeasGapConfig IE), or may be the same (new) information element as the information element for the aperiodic measurement gap.

### <Exemplary Operation>

Next, the exemplary operation of terminal 200 related to the semi-persistent measurement gap will be described with reference to FIG. 23.

In step S41, terminal 200 receives first information related to the extended period for the measurement using the measurement signal from base station 100. For example, the first information may be a measurement gap configuration information element (for example, MeasGapConfig IE) that is an RRC parameter or the same (new) information element as the information element.

In step S42, terminal 200 periodically configures the extended period for the measurement using the measurement signal based on the received first information.

In step S43, terminal 200 receives second information for activating the extended period from base station 100. For example, the second information may be the DCI or the MAC CE for activating the measurement gap described for the semi-persistent measurement gap.

In step S44, terminal 200 performs the measurement in the subsequent extended period, and does not perform the reception or transmission of the signal from or to the base station.

After that, when terminal 200 receives third information for deactivating the extended period from base station 100, terminal 200 may not perform the measurement in the extended period and may perform the reception or transmission of the signal. For example, the third information may be the DCI or the MAC CE for deactivating the measurement gap described for the semi-persistent measurement gap.

In addition, in a case of the periodic measurement gap, steps S41 and S42 may be performed, and then the periodic extended period may be enabled without performing steps S43 and S44.

In addition, in a case of the aperiodic measurement gap, after steps S41 to S43 are performed, terminal 200 performs the measurement in only one extended period in step S44.

In addition, the present proposal can be applied to a plurality of measurement gaps (configurations) in the same manner. In this case, the RRC may configure a list of a plurality of measurement gaps (configurations).

According to Proposal 4, the influence caused by the scheduling restriction related to the measurement can be reduced by the activation and deactivation of the semi-persistent measurement gap or the activation of the aperiodic measurement gap.

### <Proposal 5>

As Proposal 5, the support for the base station to indicate skipping or disabling the RRM measurement will be described.

The operation of terminal 200 related to skipping or disabling the RRM measurement may be based on the indication from base station 100.

For example, when terminal 200 is indicated by base station 100 to skip or disable the RRM measurement occasion (for example, SMTC window or the like), terminal 200 may not perform the RRM measurement in the RRM measurement occasion, and the existing scheduling restriction may not be applied to the symbol or the symbol in the SMTC window period to be measured. When the RRM measurement is without the measurement gap, terminal 200 may receive the DL channel/signal in the SSB/CSI-RS symbol to be measured (in the SMTC window), or may receive/transmit the DL/UL channel/signal in all symbols in the SMTC window period.

The skip or disablement of the RRM measurement may be in accordance with the following option 1/2.

### [Option 1]

The skip or disablement of the RRM measurement may be indicated/configured for each RRM measurement configuration. More specifically, the skip or disablement of the RRM measurement may be in accordance with the following option 1-1/1-2.

### · Option 1-1

The skip or disablement of the RRM measurement occasion may be indicated by a semi-static indication by the RRC or the SIB. The semi-static RRM measurement skip or disablement pattern may be configured by the RRC for each RRM measurement configuration. The semi-static indication by the RRC or the SIB may be referred to as information indicating that the measurement is not performed (in a part of the periodic period associated with the measurement). Terminal 200 may be indicated to skip or disable the RRM measurement occasion by receiving the semi-static indication from base station 100, and may determine the RRM measurement occasion to be skipped and/or the RRM measurement occasion not to be skipped based on the semi-static indication.

### · Option 1-2

The skip or disablement of the RRM measurement occasion may be indicated by a dynamic indication. The dynamic indication (for example, DCI or MAC CE) may indicate the skip or disablement of the RRM measurement for a certain RRM measurement configuration. In this case, the target RRM measurement configuration index (or ID) may be indicated by the DCI or the MAC CE. The dynamic indication may be referred to as information indicating that the measurement is not performed (in a part of the periodic period associated with the measurement). Terminal 200 may be indicated to skip or disable the RRM measurement occasion by receiving the dynamic indication from base station 100, and may determine the RRM measurement occasion to be skipped and/or the RRM measurement occasion not to be skipped based on the dynamic indication. The dynamic indication may be in accordance with the following option 1-2-1/1-2-2/1-2-3/1-2-4.

### ·· Option 1-2-1

As described in the Alt 2-1 of Proposal 2, the DCI or the MAC CE may indicate the skip of N (N is an integer of 1 or more) consecutive RRM measurement occasions.

As an example of Option 1-2-1, the first RRM measurement occasion to be skipped may be the first RRM measurement occasion that is X symbols/slots after the last symbol/slot of the DCI (or the HARQ-ACK for the PDSCH corresponding to the MAC CE for the indication) for the indication. As described above, terminal 200 may determine the first RRM measurement occasion to be skipped based on the DCI/MAC CE. The value of X may be defined by the standard, may be configured by the RRC, or may be indicated by the DCI/MAC CE for the indication.

In addition, the value of N may be defined by the standard (for example, N = 1), may be configured by the RRC, or may be indicated by the DCI/MAC CE for the indication.

The RRM measurement occasion not included in the N consecutive RRM measurement occasions is not skipped, and terminal 200 needs to perform the RRM measurement in the RRM measurement occasion not to be skipped, and the scheduling restriction defined in the current standard is applied in the RRM measurement occasion not to be skipped. In the N consecutive RRM measurement occasions, terminal 200 may not perform the RRM measurement and may receive/transmit the DL/UL channel/signal.

### ·· Option 1-2-2

As described in the Alt 2-2 of Proposal 2, the DCI or the MAC CE may indicate the skip of the RRM measurement occasion in the skipping window. The skipping window may be referred to as a no-measurement period, a period in which the measurement is not performed, or the like.

As an example of Option 1-2-2, the start of the skipping window may be X symbols/slots after the last symbol/slot of the DCI (or the HARQ-ACK for the PDSCH corresponding to the MAC CE for the indication) for the indication. As described above, terminal 200 may determine the start of the skipping window based on the DCI/MAC CE. The value of X may be defined by the standard, may be configured by the RRC, or may be indicated by the DCI/MAC CE for the indication.

In addition, the length of the skipping window may be defined by the standard, may be configured by the RRC, or may be indicated by the DCI/MAC CE for the indication.

The RRM measurement occasion not included in the skipping window is not skipped, and terminal 200 needs to perform the RRM measurement in the RRM measurement occasion not to be skipped, and the scheduling restriction defined in the current standard is applied in the RRM measurement occasion not to be skipped. In the RRM measurement occasion included in the skipping window, terminal 200 may not perform the RRM measurement and may receive/transmit the DL/UL channel/signal.

### ·· Option 1-2-3

As described in the Alt 2-3 of Proposal 2, the DCI or the MAC CE may indicate whether or not to skip each of N (N is an integer of 1 or more) consecutive RRM measurement occasions.

As an example of Option 1-2-3, the DCI or the MAC CE may indicate (or include) a bitmap in which each bit indicates whether or not to skip a corresponding RRM measurement occasion from among the indicated N consecutive RRM measurement occasions. The bit value "0" may indicate "not skip (not to be skipped)," and the bit value "1" may indicate "skip (to be skipped)," or the bit value "1" may indicate "not skip (not to be skipped)," and the bit value "0" may indicate "skip (to be skipped)." For the RRM measurement occasion indicated to be "skipped," terminal 200 may not perform the RRM measurement in the RRM measurement occasion, the scheduling restriction defined in the current standard may not be applied, and may receive/transmit the DL/UL channel/signal. On the other hand, for the RRM measurement occasion indicated to be "not skipped," terminal 200 needs to perform the RRM measurement in the RRM measurement occasion, and the scheduling restriction defined in the current standard is applied in the RRM measurement occasion not to be skipped.

The first RRM measurement occasion among the N consecutive RRM measurement occasions may be determined to be the first RRM measurement occasion that is X symbols/slots after the last symbol/slot of the DCI (or the HARQ-ACK for the PDSCH corresponding to the MAC CE for the indication) for the indication. As described above, terminal 200 may determine the first RRM measurement occasion to be skipped based on the DCI/MAC CE. The value of X may be defined by the standard, may be configured by the RRC, or may be indicated by the DCI/MAC CE for the indication.

In addition, the value of N may be defined by the standard, may be configured by the RRC, or may be indicated by the DCI/MAC CE for the indication.

### ·· Option 1-2-4

As described in the Alt 2-4 of Proposal 2, the DCI or the MAC CE may indicate to terminal 200 that the configured RRM measurement is disabled until terminal 200 receives another DCI or MAC CE for enabling the RRM measurement. In other words, when terminal 200 receives the DCI or the MAC CE for disabling the RRM measurement, terminal 200 may continue the disablement (state) of the RRM measurement until terminal 200 receives another DCI or MAC CE for enabling the RRM measurement. The DCI or the MAC CE for enabling the RRM measurement may be referred to as information indicating that the measurement is performed (in a (different) part of the periodic period associated with the measurement).

As an example of Option 1-2-4, when terminal 200 detects or receives the DCI or the MAC CE from base station 100 for indicating the disablement of the RRM measurement, terminal 200 may determine to disable the RRM measurement X symbols/slots after the last symbol/slot of the DCI (or the HARQ-ACK for the PDSCH corresponding to the MAC CE for the indication) for the indication. The value of X may be defined by the standard, may be configured by the RRC, or may be indicated by the DCI/MAC CE for the indication.

When the RRM measurement is disabled and terminal 200 detects or receives the (another) DCI or the MAC CE from base station 100 for indicating the enablement of the RRM measurement, terminal 200 may determine to enable the RRM measurement Y symbols/slots after the last symbol/slot of the (another) DCI (or the HARQ-ACK for the PDSCH corresponding to the (another) MAC CE for the indication) for the indication. The value of Y may be defined by the standard, may be configured by the RRC, or may be indicated by the (another) DCI/MAC CE for the indication.

### [Option 2]

The skip or disablement of the RRM measurement may be indicated/configured (commonly) for a plurality of RRM measurement configurations. More specifically, the skip/disablement of the RRM measurement may be in accordance with the following option 2-1/2-2.

### · Option 2-1

The skip or disablement of the RRM measurement occasion may be indicated by a semi-static indication by the RRC or the SIB. The semi-static RRM measurement skip or disablement pattern may be configured by the RRC. The semi-static indication by the RRC or the SIB may be referred to as information indicating that the measurement is not performed (in a part of the periodic period associated with the measurement). Terminal 200 may be indicated to skip or disable the RRM measurement occasion by receiving the semi-static indication from base station 100, and may determine the RRM measurement occasion to be skipped and/or the RRM measurement occasion not to be skipped based on the semi-static indication.

This RRM measurement skip or disablement pattern may be applied to one or more of the following Alt a to Alt g.
Alt a: All configured RRM measurement configurations
Alt b: Intra-frequency RRM measurement or inter-frequency RRM measurement
Alt c: SSB-based RRM measurement or CSI-RS-based RRM measurement
Alt d: RRM measurement with measurement gap or RRM measurement without measurement gap
Alt e: RRM measurement configuration configured for one or more certain cells (one or more certain cells may be configured by the RRC or may be predetermined by the standard (for example, Pcell/Pscell/Scell, cell in FR1/FR2, or the like))
Alt f: List of configured RRM measurement configurations
Alt g: RRM measurement configuration for specific purpose or RRM measurement configuration having specific priority value

### · Option 2-2

The skip or disablement of the RRM measurement occasion may be indicated by a dynamic indication. The dynamic indication (for example, DCI or MAC CE) may indicate the skip or disablement of the RRM measurement for a plurality of RRM measurement configurations. The dynamic indication may be referred to as information indicating that the measurement is not performed (in a part of the periodic period associated with the measurement). Terminal 200 may be indicated to skip or disable the RRM measurement occasion by receiving the dynamic indication from base station 100, and may determine the RRM measurement occasion to be skipped and/or the RRM measurement occasion not to be skipped based on the dynamic indication. The dynamic indication may be in accordance with the following option 2-2-1/2-2-2/2-2-3/2-2-4.

### · Option 2-2-1

As described in the Alt 2-1 of Proposal 2, the DCI or the MAC CE may indicate the skip of N (N is an integer of 1 or more) consecutive RRM measurement occasions.

As an example of Option 2-2-1, the first RRM measurement occasion to be skipped may be the first RRM measurement occasion that is X symbols/slots after the last symbol/slot of the DCI (or the HARQ-ACK for the PDSCH corresponding to the MAC CE for the indication) for the indication. As described above, terminal 200 may determine the first RRM measurement occasion to be skipped based on the DCI/MAC CE. The value of X may be defined by the standard, may be configured by the RRC, or may be indicated by the DCI/MAC CE for the indication.

In addition, the value of N may be defined by the standard (for example, N = 1), may be configured by the RRC, or may be indicated by the DCI/MAC CE for the indication.

The RRM measurement occasion not included in the N consecutive RRM measurement occasions is not skipped, and terminal 200 needs to perform the RRM measurement in the RRM measurement occasion not to be skipped, and the scheduling restriction defined in the current standard is applied in the RRM measurement occasion not to be skipped. In the N consecutive RRM measurement occasions, terminal 200 may not perform the RRM measurement and may receive/transmit the DL/UL channel/signal.

### ·· Option 2-2-2

As described in the Alt 2-2 of Proposal 2, the DCI or the MAC CE may indicate the skip of the RRM measurement occasion in the skipping window. The skipping window may be referred to as a no-measurement period, a period in which the measurement is not performed, or the like.

As an example of Option 2-2-2, the start of the skipping window may be X symbols/slots after the last symbol/slot of the DCI (or the HARQ-ACK for the PDSCH corresponding to the MAC CE for the indication) for the indication. As described above, terminal 200 may determine the start of the skipping window based on the DCI/MAC CE. The value of X may be defined by the standard, may be configured by the RRC, or may be indicated by the DCI/MAC CE for the indication.

In addition, the length of the skipping window may be defined by the standard, may be configured by the RRC, or may be indicated by the DCI/MAC CE for the indication.

The RRM measurement occasion not included in the skipping window is not skipped, and terminal 200 needs to perform the RRM measurement in the RRM measurement occasion not to be skipped, and the scheduling restriction defined in the current standard is applied in the RRM measurement occasion not to be skipped. In the RRM measurement occasion included in the skipping window, terminal 200 may not perform the RRM measurement and may receive/transmit the DL/UL channel/signal.

### ·· Option 2-2-3

As described in the Alt 2-3 of Proposal 2, the DCI or the MAC CE may indicate whether or not to skip each of N (N is an integer of 1 or more) consecutive RRM measurement occasions.

As an example of Option 2-2-3, the DCI or the MAC CE may indicate (or include) a bitmap in which each bit indicates whether or not to skip a corresponding RRM measurement occasion from among the indicated N consecutive RRM measurement occasions. The bit value "0" may indicate "not skip (not to be skipped)," and the bit value "1" may indicate "skip (to be skipped)," or the bit value "1" may indicate "not skip (not to be skipped)," and the bit value "0" may indicate "skip (to be skipped)." For the RRM measurement occasion indicated to be "skipped," terminal 200 may not perform the RRM measurement in the RRM measurement occasion, the scheduling restriction defined in the current standard may not be applied, and may receive/transmit the DL/UL channel/signal. On the other hand, for the RRM measurement occasion indicated to be "not skipped," terminal 200 needs to perform the RRM measurement in the RRM measurement occasion, and the scheduling restriction defined in the current standard is applied in the RRM measurement occasion not to be skipped.

The first RRM measurement occasion among the N consecutive RRM measurement occasions may be determined to be the first RRM measurement occasion that is X symbols/slots after the last symbol/slot of the DCI (or the HARQ-ACK for the PDSCH corresponding to the MAC CE for the indication) for the indication. As described above, terminal 200 may determine the first RRM measurement occasion to be skipped based on the DCI/MAC CE. The value of X may be defined by the standard, may be configured by the RRC, or may be indicated by the DCI/MAC CE for the indication.

In addition, the value of N may be defined by the standard, may be configured by the RRC, or may be indicated by the DCI/MAC CE for the indication.

### ·· Option 2-2-4

As described in the Alt 2-4 of Proposal 2, the DCI or the MAC CE may indicate to terminal 200 that the configured RRM measurement is disabled until terminal 200 receives another DCI or MAC CE for enabling the RRM measurement. In other words, when terminal 200 receives the DCI or the MAC CE for disabling the RRM measurement, terminal 200 may continue the disablement (state) of the RRM measurement until terminal 200 receives another DCI or MAC CE for enabling the RRM measurement.

As an example of Option 2-2-4, when terminal 200 detects or receives the DCI or the MAC CE from base station 100 for indicating the disablement of the RRM measurement, terminal 200 may determine to disable the RRM measurement X symbols/slots after the last symbol/slot of the DCI (or the HARQ-ACK for the PDSCH corresponding to the MAC CE for the indication) for the indication. The value of X may be defined by the standard, may be configured by the RRC, or may be indicated by the DCI/MAC CE for the indication.

When the RRM measurement is disabled and terminal 200 detects or receives the (another) DCI or the MAC CE from base station 100 for indicating the enablement of the RRM measurement, terminal 200 may determine to enable the RRM measurement Y symbols/slots after the last symbol/slot of the (another) DCI (or the HARQ-ACK for the PDSCH corresponding to the (another) MAC CE for the indication) for the indication. The value of Y may be defined by the standard, may be configured by the RRC, or may be indicated by the (another) DCI/MAC CE for the indication.

The dynamic indication may be applied to one or more of the following Alt h to Alt n.
Alt h: All configured RRM measurement configurations
Alt i: Intra-frequency RRM measurement or inter-frequency RRM measurement
Alt j: SSB-based RRM measurement or CSI-RS-based RRM measurement
Alt k: RRM measurement with measurement gap or RRM measurement without measurement gap
Alt l: RRM measurement configuration configured for one or more certain cells (one or more certain cells may be configured by the RRC or may be predetermined by the standard (for example, Pcell/Pscell/Scell, cell in FR1/FR2, or the like))
Alt m: List of configured RRM measurement configurations
Alt n: RRM measurement configuration for specific purpose or RRM measurement configuration having specific priority value

In the present application, the RRM measurement occasion, the SMTC window, the SSB symbol, the CSI-RS symbol, and the like may be referred to as a period or an interval associated with the measurement, a period or an interval for the measurement, a measurement period or an interval, or the like.

### <Exemplary Operation>

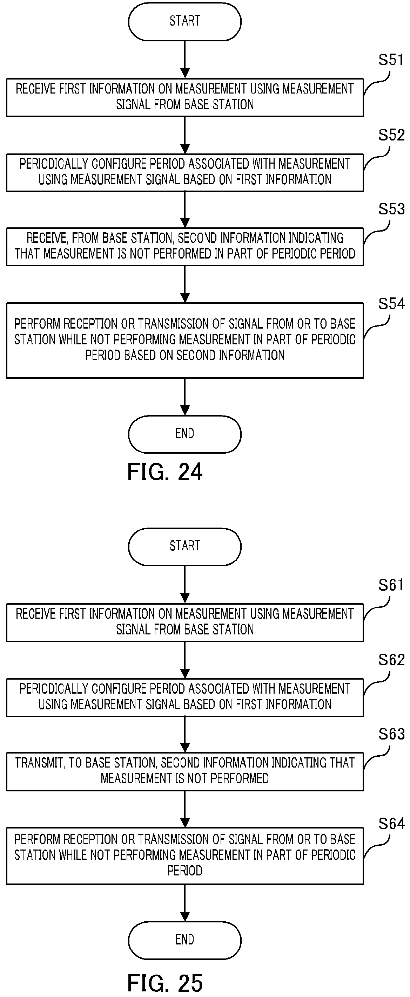

Next, the exemplary operation of terminal 200 will be described with reference to FIG. 24.

In step S51, terminal 200 receives first information related to the measurement using the measurement signal from base station 100. For example, the first information may be an existing RRM measurement configuration information element (for example, MeasConfig IE) that is an RRC parameter or the same (new) information element as the information element.

In step S52, terminal 200 periodically configures the period associated with the measurement using the measurement signal based on the received first information.

In step S53, terminal 200 receives second information indicating that the measurement is not performed in a part of the periodic period from base station 100. For example, the second information may be the semi-static indication described in Option 1-1/2-1 or the dynamic indication described in Option 1-2/2-2.

In step S54, terminal 200 does not perform the measurement in a part of the periodic period based on the received second information, and performs the reception or transmission of the signal from or to the base station.

According to Proposal 5, the RRM measurement (occasion) can be skipped or disabled based on the semi-static indication/dynamic indication from the base station, so that the influence caused by the scheduling restriction related to the measurement can be reduced.

### <Proposal 6>

As Proposal 6, the support for the terminal to report the request/indication for skipping or disabling the RRM measurement will be described.

Terminal 200 may report the request/indication for skipping or disabling the RRM measurement to base station 100 via the UCI/MAC CE on the PUCCH/PUSCH. In a case of using the PUCCH/PUSCH, the PUCCH/PUSCH resource for terminal 200 to report the request/indication for skipping or disabling the RRM measurement may be configured by the RRC or may be indicated by the scheduling DCI. The request/indication for skipping or disabling the RRM measurement may be referred to as information indicating that the measurement is not performed (in a part of the periodic period associated with the measurement).

The report of the request/indication for skipping or disabling the RRM measurement may be periodic and/or semi-persistent and/or aperiodic and/or may be triggered by an event. When such a report is triggered by an event, the event may be, for example, an event indicating a situation in which the measurement does not need to be performed. For example, the event may be that there are a predetermined number of measurement periods in which the measured reception quality of the measurement signal (SSB or the like) is within a predetermined range in a plurality of consecutive measurement periods (SMTC windows or the like), that the measurement periods in which the measured reception quality of the measurement signal is within a predetermined range continue for a predetermined number of times continuously, or the like.

The report content and the report procedure may be in accordance with the following options 1/2/3.

### [Option 1]

Terminal 200 may report the request that triggers the skip or disablement of the RRM measurement to base station 100. Terminal 200 may expect to monitor/receive the indication from base station 100 for skipping or disabling the RRM measurement after terminal 200 reports the request to base station 100 (base station 100 transmits the indication). In Option 1, how to skip the RRM measurement may depend on the indication from base station 100. That is, base station 100 may indicate, to terminal 200, how to skip the RRM measurement (how to skip the RRM measurement may be indicated to terminal 200 by base station 100).

The indication from base station 100 of how to skip the RRM measurement may be in accordance with the above-described proposal 5. That is, the operation of terminal 200 in a case of skipping the RRM measurement may be in accordance with the indication from base station 100 as described in the above-described proposal 5.

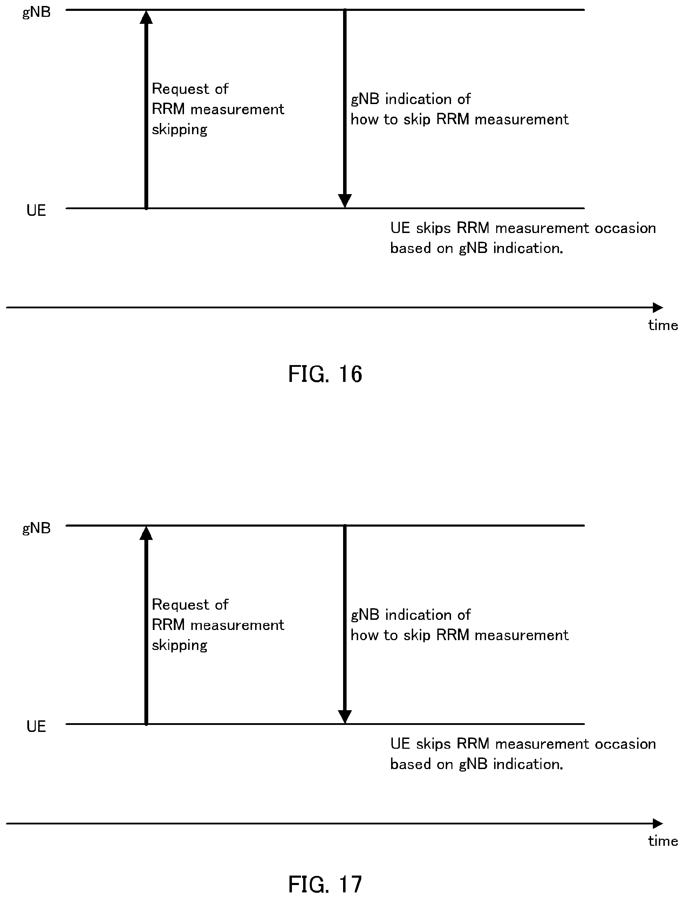

For example, as shown in FIG. 16, terminal 200 transmits the request to base station 100, and then receives the indication of how to skip the RRM measurement. Then, terminal 200 skips the RRM measurement occasion based on the indication from base station 100.

### [Option 2]

Terminal 200 may report the request for skipping or disabling the RRM measurement and information related to the requested/suggested skipping occasion (RRM measurement occasion to be skipped) to base station 100. In this case, terminal 200 also requests/suggests the RRM measurement gap occasion to be skipped.

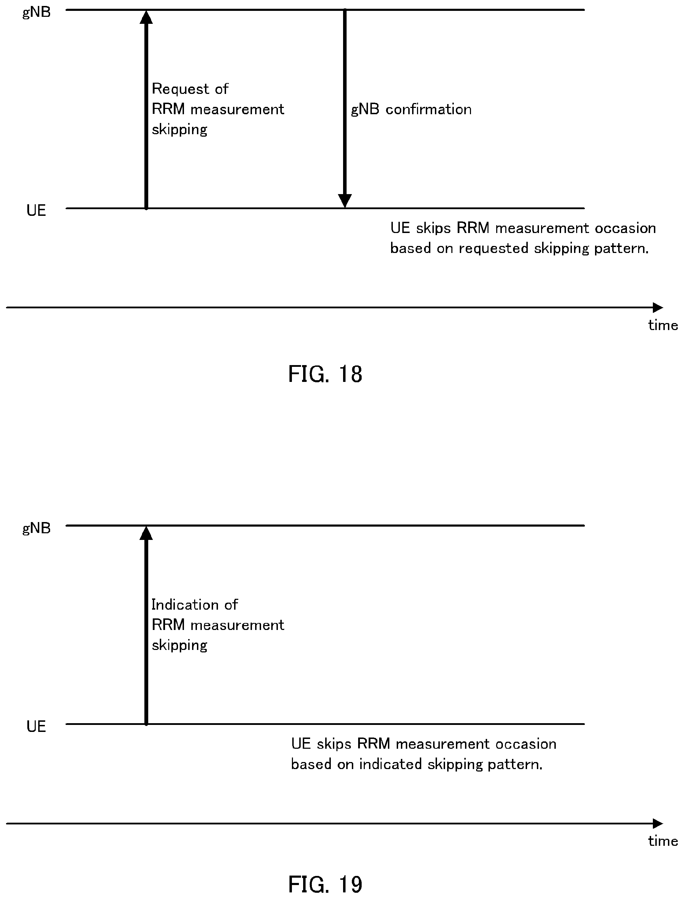

In Option 2, the indication from base station 100 of how to skip the RRM measurement or confirmation from base station 100 to confirm (accept, approve) the request for skipping or disabling the RRM measurement is necessary. In the former case, terminal 200 skips the RRM measurement occasion according to the indication from base station 100, and in the latter case, terminal 200 skips the RRM measurement occasion as requested/suggested by terminal 200. This will be described later with reference to FIGS. 17 and 18.

The content of the request by terminal 200 may include one or more of the following options 2-a to 2-d.

### · Option 2-a: Skip of N (N is an integer of 1 or more) consecutive RRM measurement occasions

The first RRM measurement occasion to be skipped may be the first RRM measurement occasion that is X symbols/slots after the last symbol/slot of the request (for example, PUCCH/PUSCH/MAC CE corresponding to the request). As described above, terminal 200 may determine the first RRM measurement occasion to be skipped. The value of X may be defined by the standard, may be configured by the RRC, or may be indicated by the request.

In addition, the value of N may be defined by the standard (for example, N = 1), may be configured by the RRC, or may be indicated by the request.

### · Option 2-b: Skip of RRM measurement occasion in skipping window

The start of the skipping window may be X symbols/slots after the last symbol/slot of the request (for example, PUCCH/PUSCH/MAC CE corresponding to the request). As described above, terminal 200 may determine the start of the skipping window. The value of X may be defined by the standard, may be configured by the RRC, or may be indicated by the request.

In addition, the length of the skipping window may be defined by the standard, may be configured by the RRC, or may be indicated by the request.

### · Option 2-c: Skip pattern related to whether or not to skip each of N (N is an integer of 1 or more) consecutive RRM measurement occasions

The request may indicate (or include) a bitmap in which each bit indicates whether or not to skip a corresponding RRM measurement occasion from among the indicated N consecutive RRM measurement occasions. The bit value "0" may indicate "not skip (not to be skipped)," and the bit value "1" may indicate "skip (to be skipped)," or the bit value "1" may indicate "not skip (not to be skipped)," and the bit value "0" may indicate "skip (to be skipped)."

The first RRM measurement occasion among the N consecutive measurement gap occasions may be the first RRM measurement occasion that is X symbols/slots after the last symbol/slot of the request (for example, PUCCH/PUSCH/MAC CE corresponding to the request). As described above, terminal 200 may determine the first RRM measurement occasion to be skipped. The value of X may be defined by the standard, may be configured by the RRC, or may be indicated by the request.

In addition, the value of N may be defined by the standard, may be configured by the RRC, or may be indicated by the request.
· Option 2-d: Disablement (leaving in a disabled state) of configured RRM measurement until terminal 200 transmits request for enabling RRM measurement may be indicated. The request for enabling the RRM measurement may be referred to as information indicating that the measurement is performed (in a (different) part of the periodic period associated with the measurement).

Terminal 200 may determine to disable the RRM measurement occasion starting X symbols/slots after the request (for example, PUCCH/PUSCH/MAC CE corresponding to the request). The value of X may be defined by the standard, may be configured by the RRC, or may be indicated by the DCI/MAC CE for the indication.

When the RRM measurement is disabled and terminal 200 transmits a (another) request for enabling the RRM measurement, terminal 200 may determine to enable the RRM measurement occasion starting Y symbols/slots after the last symbol/slot of the (another) request (for example, PUCCH/PUSCH/MAC CE corresponding to the (another) request). The value of Y may be defined by the standard, may be configured by the RRC, or may be indicated by the (another) request.

### · Variation of Option 2-a/2-b/2-c/2-d

The content of the request by terminal 200 may be for one or more of the following Alt 1 to Alt 3.

### ·· Alt 1

The content of the request by terminal 200 may be for all RRM measurement configurations/types.

### ·· Alt 2

The content of the request by terminal 200 may be for one or more specific RRM measurement configurations, and one or more target RRM measurement configurations may be included in the request.

### ·· Alt 3

The content of the request by terminal 200 may be for a specific RRM measurement type (for example, intra-frequency RRM measurement or inter-frequency RRM measurement, RRM measurement based on SSB or RRM measurement based on CSI-RS, RRM measurement with measurement gap or RRM measurement without measurement gap, RRM measurement in FR1 or RRM measurement in FR2, or the like).

The operation of terminal 200 after terminal 200 reports the request for skipping or disabling the RRM measurement (for example, request according to Option 2-a/2-b/2-c/2-d) to base station 100 may be in accordance with the following options 2-1/2-2.

### · Option 2-1

Terminal 200 may expect to monitor/receive the indication from base station 100 for skipping or disabling the RRM measurement (base station 100 transmits the indication). In Option 2-1, how to skip the RRM measurement may depend on the indication from base station 100. That is, base station 100 may indicate, to terminal 200, how to skip the RRM measurement (how to skip the RRM measurement may be indicated to terminal 200 by base station 100).

The indication from base station 100 of how to skip the RRM measurement may be in accordance with the above-described proposal 5. That is, the operation of terminal 200 in a case of skipping the RRM measurement occasion may be in accordance with the indication from base station 100 as described in the above-described proposal 5.

For example, as shown in FIG. 17, terminal 200 transmits the request to base station 100, and then receives the indication from base station 100 of how to skip the RRM measurement. Then, terminal 200 skips the RRM measurement occasion based on the indication from base station 100.

### · Option 2-2

Terminal 200 may expect to monitor/receive, from base station 100, the confirmation of the request to skip or disable the RRM measurement (base station 100 transmits the confirmation). When terminal 200 receives the confirmation (in a monitoring window), terminal 200 may skip the RRM measurement occasion as requested. On the other hand, when terminal 200 cannot receive the confirmation (in the monitoring window), terminal 200 cannot skip the RRM measurement occasion as requested.

The above-described monitoring window may be determined as follows. · The start of the monitoring window may be the first symbol/slot that is K symbols/slots after the request, or the first symbol/slot for the PDCCH monitoring after the request (for a specific search space type or a specific DCI format). · The length of the monitoring window may be defined by the standard, may be configured by the RRC, or may be reported in the request.

For example, as shown in FIG. 18, terminal 200 receives the confirmation from base station 100 after transmitting the request to base station 100. Then, terminal 200 skips the RRM measurement occasion as requested (suggested) (for example, based on the requested (suggested) skip pattern).

As a variation of Option 2-2, when the request by terminal 200 is for a plurality of RRM measurement configurations/types, the confirmation of base station 100 may be in accordance with the following Alt 1/2.

Alt 1: The single confirmation may be applied only to the request for a plurality of RRM measurement configurations/types.

Alt 2: Terminal 200 may expect (may receive) confirmation for each RRM measurement configuration/type.

### [Option 3]

Terminal 200 may report the indication of the skip or disablement of the RRM measurement occasion to base station 100. In Option 3, the indication from base station 100 of how to skip the RRM measurement or confirmation from base station 100 to confirm (accept, approve) the request for skipping or disabling the RRM measurement is not necessary, and terminal 200 may skip the measurement gap occasion as indicated by terminal 200.

The content of the indication by terminal 200 may include one or more of Options 2-a to 2-d (including the variation) of the above-described proposal 6. Here, in Options 2-a to 2-d of the above-described proposal 6, the "request" may be replaced with the "indication."

The operation of terminal 200 after terminal 200 reports the indication of the skip or disablement of the RRM measurement (for example, indication according to Option 2-a/2-b/2-c/2-d of the above-described proposal 6) to base station 100 may be as follows.

· For the RRM measurement occasion indicated to be "skipped/disabled," terminal 200 may not perform the RRM measurement in the RRM measurement occasion, and the scheduling restriction defined in the current standard may not be applied to the symbol or the symbol in the SMTC window period to be measured. When the RRM measurement is without the measurement gap, terminal 200 may receive the DL channel/signal in the SSB/CSI-RS symbol to be measured (in the SMTC window), or may receive/transmit the DL/UL channel/signal in all symbols in the SMTC window period.

· For the RRM measurement occasion indicated to be "not skipped/enabled," terminal 200 needs to perform the RRM measurement in the RRM measurement occasion, and the scheduling restriction defined in the current standard is applied in the RRM measurement occasion not to be skipped.

For example, as shown in FIG. 19, after transmitting the indication to base station 100, terminal 200 skips the RRM measurement occasion as indicated (for example, based on the indicated skip pattern), without receiving the indication and the confirmation from base station 100.

### [Variation of Options 1/2/3]

When a plurality of RRM measurement configurations/types are present, terminal 200 may report the request/instruction to base station 100 without the details of the RRM measurement configuration/type to be skipped or disabled by the request/indication (terminal 200 may report the request/indication to skip or disable the RRM measurement to base station 100 for all the plurality of RRM measurement configurations/types), or may also report the information on the target RRM measurement configuration or the specific RRM measurement type (for example, intra-frequency RRM measurement or inter-frequency RRM measurement, RRM measurement based on SSB or RRM measurement based on CSI-RS, RRM measurement with measurement gap or RRM measurement without measurement gap, RRM measurement in FR1 or RRM measurement in FR2, or the like) intended to be skipped or disabled to base station 100.

In the present application, the RRM measurement occasion, the SMTC window, the SSB symbol, the CSI-RS symbol, and the like may be referred to as a period or an interval associated with the measurement, a period or an interval for the measurement, a measurement period or an interval, or the like.

### <Exemplary Operation>

Next, the exemplary operation of terminal 200 will be described with reference to FIG. 25.

In step S61, terminal 200 receives first information related to the measurement using the measurement signal from base station 100. For example, the first information may be an RRM measurement configuration information element (for example, MeasConfig IE) that is an existing RRC parameter or the same (new) information element as the information element.

In step S62, terminal 200 periodically configures the period associated with the measurement using the measurement signal based on the received first information.

In step S63, terminal 200 transmits the second information indicating that the measurement is not performed to base station 100. For example, the second information may be the request described in Option 1/2 or the indication described in Option 3.

In step S64, terminal 200 does not perform the measurement in a part or another part of the periodic period in response to the transmission of the second information in step S63, and performs the reception or transmission of the signal from or to the base station.

Between step S63 and step S64, base station 100 may transmit an indication to terminal 200 indicating how to skip the periodic period (information indicating that measurement is not performed during part of the periodic period) as described in Option 1/2-1, base station 100 may transmit a confirmation to terminal 200 that measurement is not performed during part of the periodic period as described in Option 2-2, or, exchange may not occur between terminal 200 and base station 100 as described in Option 3.

According to Proposal 6, the RRM measurement (occasion) can be skipped or disabled in response to the request/indication from the terminal, so that the influence caused by the scheduling restriction related to the measurement can be reduced.

### <UE Capability>

The UE capability indicating the capability of the terminal may include information indicating the following terminal capabilities. Terminal 200 may report information indicating the following terminal capabilities to base station 100. The information indicating the capability of the terminal may correspond to information for defining the capability of the terminal.
· Information for defining whether or not the terminal supports prioritizing transmission/reception of a channel/signal over RRM measurement based on one or more specific conditions
· Information for defining whether or not the terminal supports skipping or disabling the measurement gap based on the indication from the base station
· Information for defining whether or not the terminal supports reporting a request/indication for skipping or disabling the measurement gap (periodically/semi-persistently/aperiodically/when triggered by an event) in the PUCCH/PUSCH/MAC CE
· Information for defining whether or not the terminal supports periodic/semi-persistent/periodic measurement gap
· Information for defining whether or not the terminal supports skipping or disabling the RRM measurement based on the indication from the base station
· Information for defining whether or not the terminal supports reporting a request/indication for skipping or disabling the RRM measurement (periodically/semi-persistently/aperiodically/triggered by an event) in the PUCCH/PUSCH/MAC CE
· Information for defining a minimum processing time for processing the indication/confirmation of the skip or disablement of the measurement gap occasion/RRM measurement occasion (for example, "X" in the X symbols/slots described above, "K" in the K symbols/slots, or the like)

In the above, the example has been described in which the indication, the request (skip pattern, or the like), and the like for skipping or disabling the measurement gap (occasion) or the RRM measurement (occasion) are exchanged between base station 100 and terminal 200, but the indication, the request (skip pattern, or the like), and the like for not skipping or enabling the measurement gap (occasion) or the RRM measurement (occasion) may be exchanged.

Next, configurations of base station 100 and terminal 200 will be described. The configurations of base station 100 and terminal 200 described below are examples of functions related to the present embodiment. Base station 100 and terminal 200 may have functions not shown. In addition, the function segmentation and/or the name of the functional unit are not limited as long as the function of performing the operation according to the present embodiment is provided.

### <Configuration of Base Station>

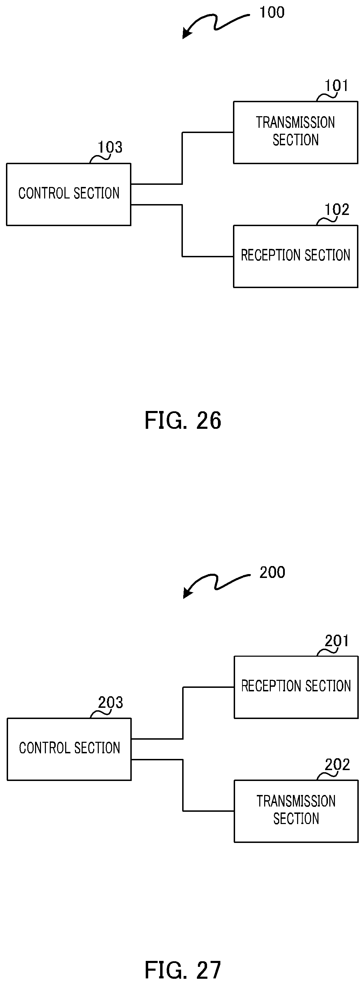

FIG. 26 is a block diagram showing an example of a configuration of base station 100 according to the present embodiment. Base station 100 includes, for example, transmission section 101, reception section 102, and control section 103. Base station 100 communicates with terminal 200 (see FIG. 27) via radio.

Transmission section 101 transmits a downlink (DL) signal to terminal 200. For example, transmission section 101 transmits the DL signal (for example, the above-described RRC, SIB, MAC CE, DCI, indication, confirmation, and the like) under the control of control section 103.

The DL signal may include, for example, a downlink data signal and control information (for example, downlink control information (DCI)). In addition, the DL signal may include information (for example, UL grant) indicating scheduling of the signal transmission of terminal 200. In addition, the DL signal may include control information of a higher layer (for example, control information of radio resource control (RRC)). In addition, the DL signal may include a reference signal.

The channel used for the transmission of the DL signal includes, for example, a downlink data channel and a downlink control channel. For example, the downlink data channel may include a physical downlink shared channel (PDSCH), and the downlink control channel may include a physical downlink control channel (PDCCH). For example, base station 100 transmits the downlink control information to terminal 200 using the PDCCH, and transmits the downlink data signal using the PDSCH.

The reference signal included in the DL signal may include, for example, at least one of a demodulation reference signal (DMRS), a phase tracking reference signal (PTRS), a channel state information-reference signal (CSI-RS), a sounding reference signal (SRS), or a positioning reference signal (PRS) for position information. For example, the reference signal such as the DMRS and the PTRS is used for demodulating the downlink data signal, and is transmitted using the PDSCH.

Reception section 102 receives an uplink (UL) signal transmitted from terminal 200. For example, reception section 102 receives the UL signal (for example, the above-described request, indication, and the like) under the control of control section 103.

Transmission section 101 and reception section 102 may be collectively referred to as a communication section.

Control section 103 controls a communication operation of base station 100 including a transmission process of transmission section 101 and a reception process of reception section 102.

For example, control section 103 acquires information such as data and control information from a higher layer, and outputs the information to transmission section 101. In addition, control section 103 outputs the data and the control information received by reception section 102 to the higher layer.

For example, control section 103 performs assignment of a resource (or a channel) used for the transmission and reception of the DL signal and/or a resource used for the transmission and reception of the UL signal based on the signal (for example, data and control information) received from terminal 200 and/or the data and the control information acquired from the higher layer. The information related to the assigned resource may be included in the control information transmitted to terminal 200.

### <Configuration of Terminal>

FIG. 27 is a block diagram showing an example of a configuration of terminal 200 according to the present embodiment. Terminal 200 includes, for example, reception section 201, transmission section 202, and control section 203. Terminal 200 communicates with base station 100 via radio, for example.

In relation to Proposal 1, for example, when a timing of receiving the signal and a period (measurement gap occasion, SMTC window, or the like) associated with the measurement using the measurement signal (SSB or the like) (SSB-based measurement or the like) overlap with each other, reception section 201 may receive the signal from base station 100 at the above timing in accordance with the determination of control section 203.

In relation to Proposal 2, for example, reception section 201 may receive first information (RRC or the like) related to an extended period (measurement gap occasion or the like) for the measurement using the measurement signal (SSB or the like) (SSB-based measurement or the like) from base station 100. For example, reception section 201 may receive second information (RRC, SIB, MAC CE, DCI, or the like) indicating that the measurement is not performed in a part of the periodic extended period from base station 100. For example, reception section 201 may receive information (MAC CE, DCI, or the like) indicating that the measurement is performed in another part of the periodic extended period after receiving the second information from base station 100. Reception section 201 may receive the signal in a part of the periodic extended period from base station 100.

In relation to Proposal 3, for example, reception section 201 may receive first information (RRC or the like) related to an extended period (measurement gap occasion or the like) for the measurement using the measurement signal (SSB or the like) (SSB-based measurement or the like) from base station 100. For example, reception section 201 may receive third information (RRC, SIB, MAC CE, DCI, or the like) indicating that the measurement is not performed in a part of the periodic extended period from base station 100 after the second information (request or the like) is transmitted to base station 100. For example, the second information (request or the like) may indicate that the measurement is not performed in a part or another part of the periodic extended period, and reception section 201 may receive fourth information (RRC, SIB, MAC CE, DCI, or the like) indicating that the measurement is not performed in a part of the periodic extended period from base station 100 after the second information is transmitted to base station 100. For example, the second information (skip pattern or the like and request) may indicate that the measurement is not performed in a part of the periodic extended period, and reception section 201 may receive fourth information (RRC, SIB, MAC CE, DCI, or the like) indicating that the measurement is not performed in a part of the periodic extended period from base station 100 after the second information is transmitted to base station 100. For example, the second information (skip pattern or the like and request) may indicate that the measurement is not performed in a part of the periodic extended period, and reception section 201 may receive fifth information (confirmation or the like) for confirming that the measurement is not performed in a part of the periodic extended period from base station 100 after the second information is transmitted to base station 100. For example, reception section 201 may receive the signal in a part of the periodic extended period from base station 100 based on the third information, the fourth information, the second information, and the fifth information. For example, the second information (skip pattern or the like and indication) may indicate that the measurement is not performed in a part of the periodic extended period, and reception section 201 may receive the signal in a part of the periodic extended period from base station 100 based on the second information.

In relation to Proposal 4, for example, reception section 201 may receive first information (RRC or the like) related to an extended period (measurement gap occasion or the like) for the measurement using the measurement signal (SSB or the like) (SSB-based measurement or the like) from base station 100. For example, reception section 201 may receive, from base station 100, second information (MAC CE, DCI, or the like) indicating that the extended period is activated. For example, reception section 201 may not receive the signal in the periodic extended period from base station 100 based on the second information. For example, reception section 201 may receive, from base station 100, third information (MAC CE, DCI, or the like) indicating that the extended period is deactivated. For example, reception section 201 may receive the signal in the periodic extended period from base station 100 based on the third information. For example, reception section 201 may receive, from base station 100, fourth information (MAC CE, DCI, or the like) indicating that the extended period is activated. For example, reception section 201 may receive the signal in one extended period from base station 100 based on the fourth information.

In relation to Proposal 5, for example, reception section 201 may receive first information (RRC or the like) related to the measurement using the measurement signal (SSB or the like) (SSB-based measurement or the like) from base station 100. For example, reception section 201 may receive second information (RRC, SIB, MAC CE, DCI, or the like) indicating that the measurement is not performed in a part of the periodic period (SMTC window or the like) associated with the measurement from base station 100. For example, reception section 201 may receive information (MAC CE, DCI, or the like) indicating that the measurement is performed in another part of the periodic period after receiving the second information from base station 100. Reception section 201 may receive the signal in a part of the periodic period from base station 100.

In relation to Proposal 6, for example, reception section 201 may receive first information (RRC or the like) related to the measurement using the measurement signal (SSB or the like) (SSB-based measurement or the like) from base station 100. For example, reception section 201 may receive third information (RRC, SIB, MAC CE, DCI, or the like) indicating that the measurement is not performed in a part of the periodic period (SMTC window or the like) associated with the measurement from base station 100 after the second information (request or the like) is transmitted to base station 100. For example, the second information (request or the like) may indicate that the measurement is not performed in a part or another part of the periodic period, and reception section 201 may receive fourth information (RRC, SIB, MAC CE, DCI, or the like) indicating that the measurement is not performed in a part of the periodic period from base station 100 after the second information is transmitted to base station 100. For example, the second information (skip pattern or the like and request) may indicate that the measurement is not performed in a part of the periodic period, and reception section 201 may receive fourth information (RRC, SIB, MAC CE, DCI, or the like) indicating that the measurement is not performed in a part of the periodic period from base station 100 after the second information is transmitted to base station 100. For example, the second information (skip pattern or the like and request) may indicate that the measurement is not performed in a part of the periodic period, and reception section 201 may receive fifth information (confirmation or the like) for confirming that the measurement is not performed in a part of the periodic period from base station 100 after the second information is transmitted to base station 100. For example, reception section 201 may receive the signal in a part of the periodic period from base station 100 based on the third information, the fourth information, and the second information and the fifth information. For example, the second information (skip pattern or the like and indication) may indicate that the measurement is not performed in a part of the periodic period, and reception section 201 may receive the signal in a part of the periodic period from base station 100 based on the second information.

Transmission section 202 transmits the UL signal to base station 100. For example, transmission section 202 transmits the UL signal (for example, the above-described request, indication, and the like) under the control of control section 203.

In relation to Proposal 1, for example, when a timing of transmitting the signal and a period (measurement gap occasion, SMTC window, or the like) associated with the measurement using the measurement signal (SSB or the like) (SSB-based measurement or the like) overlap with each other, transmission section 202 may transmit the signal to base station 100 at the above timing in accordance with the determination of control section 203.

In relation to Proposal 2, for example, transmission section 202 may transmit the signal to base station 100 in a part of the periodic extended period (measurement gap occasion or the like) for the measurement using the measurement signal (SSB or the like) (SSB-based measurement or the like).

In relation to Proposal 3, for example, transmission section 202 may transmit, to base station 100, the second information indicating that the measurement using the measurement signal (SSB or the like) (SSB-based measurement or the like) is not performed. For example, transmission section 202 may transmit the signal to base station 100 in a part of the periodic extended period (measurement gap occasion or the like) for the measurement based on the third information, the fourth information, the second information, and the fifth information. The second information may indicate that the measurement is not performed in a part of the periodic extended period, and transmission section 202 may not transmit the signal to base station 100 in a part of the periodic extended period based on the second information.

In relation to Proposal 4, for example, transmission section 202 may not transmit the signal to base station 100 in the periodic extended period (measurement gap occasion or the like) for the measurement using the measurement signal (SSB or the like) (SSB-based measurement or the like) based on the second information. For example, transmission section 202 may transmit the signal to base station 100 in the periodic extended period based on the third information. For example, transmission section 202 may not transmit the signal to base station 100 in one extended period based on the fourth information.

In relation to Proposal 5, for example, transmission section 202 may transmit the signal to base station 100 in a part of the periodic period (SMTC window or the like) associated with the measurement using the measurement signal (SSB or the like) (SSB-based measurement or the like).

In relation to Proposal 6, for example, transmission section 202 may transmit the second information indicating that the measurement using the measurement signal (SSB or the like) (SSB-based measurement or the like) is not performed to base station 100. For example, transmission section 202 may transmit the signal to base station 100 in a part of the periodic period (SMTC window or the like) associated with the measurement using the measurement signal (SSB or the like) (SSB-based measurement or the like) based on the third information, the fourth information, the second information, and the fifth information. The second information may indicate that the measurement is not performed in a part of the periodic period, and transmission section 202 may not transmit the signal to base station 100 in a part of the periodic extended period based on the second information.

The UL signal may include, for example, an uplink data signal and control information (for example, UCI). For example, information (for example, UE capability) related to the processing capability of terminal 200 may be included. In addition, the UL signal may include a reference signal.

The channel used for the transmission of the UL signal includes, for example, an uplink data channel and an uplink control channel. For example, the uplink data channel may include a physical uplink shared channel (PUSCH), and the uplink control channel may include a physical uplink control channel (PUCCH). For example, terminal 200 transmits the uplink control information to base station 100 using the PUCCH, and transmits the data signal of the uplink using the PUSCH.

The reference signal included in the UL signal may include, for example, at least one of a DMRS, a PTRS, a CSI-RS, an SRS, or a PRS. For example, the reference signal such as the DMRS and the PTRS is used for demodulating the data signal of the uplink, and is transmitted using the uplink channel (for example, PUSCH).

Reception section 201 and transmission section 202 may be collectively referred to as a communication section.

Control section 203 controls a communication operation of terminal 200 including a reception process in reception section 201 and a transmission process in transmission section 202.

For example, control section 203 acquires information such as data and control information from a higher layer, and outputs the information to transmission section 202. In addition, control section 203 outputs the data and the control information received by reception section 201 to the higher layer.

For example, control section 203 controls transmission of information to be fed back to base station 100. The information to be fed back to base station 100 may include, for example, a HARQ-ACK, channel state information (CSI), or a scheduling request (SR). The information to be fed back to base station 100 may be included in the UCI.

In relation to Proposal 1, for example, control section 203 may determine whether to receive or transmit the signal or to perform the measurement using the measurement signal (SSB or the like) (SSB-based measurement or the like) when a timing of receiving or transmitting the signal overlaps with a period (measurement gap occasion, SMTC window, or the like) associated with the measurement using the measurement signal (SSB or the like) (SSB-based measurement or the like). For example, control section 203 may perform the above-described determination based on information indicating a priority of the signal, the period, and/or the measurement, a predefined condition, and the like. For example, control section 203 may further perform the above-described determination when the signal is received or transmitted in a specific cell (Pcell or the like) or carrier (CC or the like).

In relation to Proposal 2, for example, control section 203 may periodically configure an extended period (measurement gap occasion or the like) for the measurement using the measurement signal (SSB or the like) (SSB-based measurement or the like) based on the first information. For example, control section 203 may determine a part of the periodic extended period in which the measurement is not performed based on the second information, and may not perform the measurement in the determined part of the periodic extended period.

In relation to Proposal 3, for example, control section 203 may periodically configure an extended period (measurement gap occasion or the like) for the measurement using the measurement signal (SSB or the like) (SSB-based measurement or the like) based on the first information. For example, control section 203 may determine a part of the periodic extended period in which the measurement is not performed based on the second information, the third information, the fourth information, the second information, and the fifth information, and may not perform the measurement in the determined part of the periodic extended period.

In relation to Proposal 4, for example, control section 203 may periodically configure an extended period (measurement gap occasion or the like) for the measurement using the measurement signal (SSB or the like) (SSB-based measurement or the like) based on the first information. For example, control section 203 may activate the periodic extended period based on the second information. For example, control section 203 may deactivate the periodic extended period based on the third information. For example, control section 203 may activate the extended period based on the fourth information.

In relation to Proposal 5, for example, control section 203 may periodically configure a period (SMTC window or the like) associated with the measurement using the measurement signal (SSB or the like) (SSB-based measurement or the like) based on the first information. For example, control section 203 may determine a part of the periodic period in which the measurement is not performed based on the second information, and may not perform the measurement in the determined part of the periodic period.

In relation to Proposal 6, for example, control section 203 may periodically configure a period (SMTC window or the like) associated with the measurement using the measurement signal (SSB or the like) (SSB-based measurement or the like) based on the first information. For example, control section 203 may determine a part of the periodic period in which the measurement is not performed based on the second information, the third information, the fourth information, and the second information and the fifth information, and may not perform the measurement in the determined part of the periodic period.

The channel used for the transmission of the DL signal and the channel used for the transmission of the UL signal are not limited to the above-described examples. For example, the channel used for the transmission of the DL signal and the channel used for the transmission of the UL signal may include a random access channel (RACH) and a physical broadcast channel (PBCH). The RACH may be used for transmission of downlink control information (DCI) including, for example, a random access radio network temporary identifier (RA-RNTI).

With the above-described configuration, the influence caused by the scheduling restriction related to the measurement can be reduced.

### <Summary of Embodiment>

As described above, according to one aspect of the present disclosure related to Proposal 1, a terminal is provided, the terminal including: a control section that determines whether to receive or transmit a signal or to perform measurement using a measurement signal when a timing of receiving or transmitting the signal overlaps with a period associated with the measurement using the measurement signal; and a communication section that receives or transmits the signal at the timing in accordance with the determination..

With the above-described configuration, the reception or transmission of the signal can be prioritized over the measurement, so that the influence caused by the scheduling restriction related to the measurement can be reduced.

In one example, the control section determines whether to receive or transmit the signal or to perform the measurement using the measurement signal based on information indicating a priority of the signal, the period, and/or the measurement.

With the above-described configuration, using the priority as a control criterion makes it possible to control whether to receive or transmit the signal or to perform the measurement.

In one example, the control section determines whether to receive or transmit the signal or to perform the measurement using the measurement signal based on a predefined condition.

With the above-described configuration, since the signal is not exchanged between the terminal and the base station, it is possible to reduce the signaling overhead.

In one example, the signal is received or transmitted in a specific cell.

With the above-described configuration, by limiting a target signal to be measured to the signal in a specific cell, the measurement can be more appropriately performed according to the cell while reducing the signaling overhead.

In one example, the signal is received or transmitted in a specific carrier.

With the above-described configuration, by limiting a target signal to the signal in a specific carrier, the measurement can be more appropriately performed according to the carrier while reducing the signaling overhead.

According to one aspect of the present disclosure, a communication method is provided, in which a terminal determines whether to receive or transmit a signal or to perform measurement using a measurement signal when a timing of receiving or transmitting the signal overlaps with a period associated with the measurement using the measurement signal, and receives or transmits the signal at the timing in accordance with the determination.

With the above-described configuration, the reception or the transmission of the signal can be prioritized over the measurement, so that the influence caused by the scheduling restriction related to the measurement can be reduced.

In addition, according to one aspect of the present disclosure related to Proposal 2, a terminal is provided, the terminal including: a communication section that receives, from a base station, first information related to an extended period for measurement using a measurement signal; and a control section that periodically configures the extended period for the measurement using the measurement signal based on the first information, in which the communication section receives second information indicating that the measurement is not performed in a part of the extended period that is periodic from the base station, and the control section does not perform the measurement and the communication section performs reception or transmission of a signal from or to the base station in the part of the periodic extended period based on the second information.

With the above-described configuration, the measurement is not performed and the reception or transmission of the signal can be performed in a part of the periodic extended period based on the second information from the base station, so that the influence caused by the scheduling restriction related to the measurement can be reduced.

In one example, the part of the periodic extended period is number N of the periods that are consecutive to one another, where N is an integer equal to or greater than 1.

With the above-described configuration, the measurement can be avoided in a period in which it is not appropriate to perform the measurement or in a period in which the measurement is not necessary.

In one example, the part of the periodic extended period is the extended period included in a no-measurement period.

With the above-described configuration, the measurement can be avoided in a period in which it is not appropriate to perform the measurement or in a period in which the measurement is not necessary.

In one example, the second information includes third information indicating whether or not to perform the measurement in each of a plurality of the extended periods consecutive to one another, and the part of the periodic extended period is the extended period among the consecutive extended periods which corresponds to the third information indicating that the measurement is not performed.

With the above-described configuration, the measurement can be avoided in a period of various patterns.

In one example, after receiving the second information, the communication section receives fourth information indicating that the measurement is performed in another part of the periodic extended period from the base station; and the part of the periodic extended period is the extended period after the second information is received and before the fourth information is received..

With the above-described configuration, it is possible to dynamically control whether to perform the measurement or to perform the reception or transmission of the signal in the extended period.

According to one aspect of the present disclosure, a communication method performed by a terminal is provided, the communication method including: receiving, from a base station, first information related to an extended period for measurement using a measurement signal, periodically configuring the extended period for the measurement using the measurement signal based on the first information, receiving second information indicating that the measurement is not performed in a part of the extended period that is periodic from the base station, and performing reception or transmission of a signal from or to the base station while not performing the measurement based on the second information in the part of the periodic extended period.

With the above-described configuration, the measurement is not performed and the reception or transmission of the signal can be performed in a part of the periodic extended period based on the second information from the base station, so that the influence caused by the scheduling restriction related to the measurement can be reduced.

In addition, according to one aspect of the present disclosure related to Proposal 3, a terminal is provided, the terminal including: a communication section that receives, from a base station, first information related to an extended period for measurement using a measurement signal; and a control section that periodically configures the extended period for the measurement using the measurement signal based on the first information, in which the communication section transmits second information indicating that the measurement is not performed to the base station, and the control section does not perform the measurement and the communication section performs reception or transmission of a signal from or to the base station according to the transmission of the second information in a part of the extended period that is periodic.

With the above-described configuration, the measurement is not performed and the reception or transmission of the signal can be performed in a part of the periodic extended period in response to the transmission of the second information to the base station, so that the influence caused by the scheduling restriction related to the measurement can be reduced.

In one example, after transmitting the second information, the communication section receives third information indicating that the measurement is not performed in a part of the periodic extended period from the base station, and the control section does not perform the measurement and the communication section performs reception or transmission of a signal from or to the base station based on the third information in the part of the periodic extended period.

With the above-described configuration, the reception or transmission of the signal can be performed in a part of the periodic extended period by using the third information from the base station as a control criterion.

In one example, the second information indicates that the measurement is not performed in the part or another part of the periodic extended period, after transmitting the second information, the communication section receives fourth information indicating that the measurement is not performed in the part of the periodic extended period from the base station, and the control section does not perform the measurement and the communication section performs reception or transmission of a signal from or to the base station based on the fourth information in the part of the periodic extended period.

With the above-described configuration, the reception or transmission of the signal can be performed in a part of the periodic extended period by using the fourth information from the base station as a control criterion.

In one example, the second information indicates that the measurement is not performed in the part of the periodic extended period, after transmitting the second information, the communication section receives fifth information confirming that the measurement is not performed in the part of the periodic extended period from the base station, and the control section does not perform the measurement and the communication section performs reception or transmission of a signal from or to the base station based on the second information and the fifth information in the part of the periodic extended period.

With the above-described configuration, the reception or transmission of the signal can be performed in a part of the periodic extended period based on the second information transmitted from the terminal and the fifth information from the base station.

In one example, the second information indicates that the measurement is not performed in the part of the periodic extended period, and the control section does not perform the measurement and the communication section performs reception or transmission of a signal from or to the base station based on the second information in the part of the periodic extended period.

With the above-described configuration, the reception or transmission of the signal can be performed in a part of the periodic extended period as desired by the terminal based on the second information transmitted from the terminal.

According to one aspect of the present disclosure, a communication method performed by a terminal is provided, the communication method including: receiving, from a base station, first information related to an extended period for measurement using a measurement signal; periodically configuring the extended period for the measurement using the measurement signal based on the first information; transmitting second information indicating that the measurement is not performed to the base station; and performing reception or transmission of a signal from or to the base station while not performing the measurement according to the transmission of the second information in a part of the extended period that is periodic.

With the above-described configuration, the measurement is not performed and the reception or transmission of the signal can be performed in a part of the periodic extended period in response to the transmission of the second information to the base station, so that the influence caused by the scheduling restriction related to the measurement can be reduced.

In addition, according to one aspect of the present disclosure related to Proposal 4, a terminal is provided, the terminal including: a communication section that receives, from a base station, first information related to an extended period for measurement using a measurement signal; and a control section that periodically configures the extended period for the measurement using the measurement signal based on the first information, in which the communication section receives second information indicating that the extended period is activated from the base station, and the control section performs the measurement and the communication section does not perform reception or transmission of a signal from or to the base station based on the second information in the extended period that is periodic.

With the above-described configuration, the reception or transmission of the signal can be performed in the extended period that is not activated, so that the influence caused by the scheduling restriction related to the measurement can be reduced.

In one example, the communication section receives third information indicating that the extended period is deactivated from the base station, and the control section does not perform the measurement and the communication section performs reception or transmission of a signal from or to the base station in the periodic extended period based on the third information.

With the above-described configuration, the reception or transmission of the signal can be performed in the extended period that is not activated, so that the influence caused by the scheduling restriction related to the measurement can be reduced.

According to one aspect of the present disclosure, a terminal is provided, the terminal including: a communication section that receives, from a base station, first information related to an extended period for measurement using a measurement signal; and a control section that periodically configures the extended period for the measurement using the measurement signal based on the first information, in which the communication section receives second information indicating that the extended period is activated from the base station, and the control section performs the measurement and the communication section does not perform reception or transmission of a signal from or to the base station based on the second information in one of a plurality of the extended periods.

With the above-described configuration, the reception or transmission of the signal can be performed in the extended period that is not activated, so that the influence caused by the scheduling restriction related to the measurement can be reduced.

According to one aspect of the present disclosure, a communication method performed by a terminal is provided, the communication method including: receiving, from a base station, first information related to an extended period for measurement using a measurement signal; periodically configuring the extended period for the measurement using the measurement signal based on the first information; receiving second information indicating that the extended period is activated from the base station, and performing the measurement while not performing reception or transmission of a signal from or to the base station based on the second information in the extended period that is periodic.

With the above-described configuration, the reception or transmission of the signal can be performed in the extended period that is not activated, so that the influence caused by the scheduling restriction related to the measurement can be reduced.

According to one aspect of the present disclosure, a communication method performed by a terminal is provided, the communication method including: receiving, from a base station, first information related to an extended period for measurement using a measurement signal; periodically configuring the extended period for the measurement using the measurement signal based on the first information; receiving second information indicating that the extended period is activated from the base station, and performing the measurement while not performing reception or transmission of a signal from or to the base station based on the second information in one of a plurality of the extended periods.

With the above-described configuration, the reception or transmission of the signal can be performed in the extended period that is not activated, so that the influence caused by the scheduling restriction related to the measurement can be reduced.

In addition, according to one aspect of the present disclosure related to Proposal 5, a terminal is provided, the terminal including: a communication section that receives, from a base station, first information related to a measurement using a measurement signal; and a control section that periodically configures a period associated with the measurement using the measurement signal based on the first information, in which the communication section receives second information indicating that the measurement is not performed in a part of the period that is periodic from the base station, and the control section does not perform the measurement and the communication section performs reception or transmission of a signal from or to the base station in the part of the periodic period based on the second information.

With the above-described configuration, the measurement is not performed and the reception or transmission of the signal can be performed in a part of the periodic period based on the second information from the base station, so that the influence caused by the scheduling restriction related to the measurement can be reduced.

In one example, the part of the periodic period is number N of the periods that are consecutive to one another, where N is an integer equal to or greater than 1.

With the above-described configuration, the measurement can be avoided in a period in which it is not appropriate to perform the measurement or in a period in which the measurement is not necessary.

In one example, the part of the periodic period is the period included in a no-measurement period.

With the above-described configuration, the measurement can be avoided in a period in which it is not appropriate to perform the measurement or in a period in which the measurement is not necessary.

In one example, the second information includes third information indicating whether or not to perform the measurement in each of a plurality of the periods consecutive to one another, and the part of the periodic period is the period among the consecutive periods which corresponds to the third information indicating that the measurement is not performed.

With the above-described configuration, the measurement can be avoided in a period of various patterns.

In one example, after receiving the second information, the communication section receives fourth information indicating that the measurement is performed in another part of the periodic period from the base station; and the part of the periodic period is the period after the second information is received and before the fourth information is received.

With the above-described configuration, it is possible to dynamically control whether to perform the measurement or to perform the reception or transmission of the signal in the period.

According to one aspect of the present disclosure, a communication method performed by a terminal is provided, the communication method including: receiving, from a base station, first information related to a measurement using a measurement signal; periodically configuring a period associated with the measurement using the measurement signal based on the first information; receiving second information indicating that the measurement is not performed in a part of the period that is periodic from the base station, and performing reception or transmission of a signal from or to the base station while not performing the measurement based on the second information in the part of the periodic period.

With the above-described configuration, the measurement is not performed and the reception or transmission of the signal can be performed in a part of the periodic period based on the second information from the base station, so that the influence caused by the scheduling restriction related to the measurement can be reduced.

In addition, according to one aspect of the present disclosure related to Proposal 6, a terminal is provided, the terminal including: a communication section that receives, from a base station, first information related to a measurement using a measurement signal; and a control section that periodically configures a period associated with the measurement using the measurement signal based on the first information, in which the communication section transmits second information indicating that the measurement is not performed to the base station, and the control section does not perform the measurement and the communication section performs reception or transmission of a signal from or to the base station according to the transmission of the second information in a part of the period that is periodic.

With the above-described configuration, the measurement is not performed and the reception or transmission of the signal can be performed in a part of the periodic period in response to the transmission of the second information to the base station, so that the influence caused by the scheduling restriction related to the measurement can be reduced.

In one example, after transmitting the second information, the communication section receives third information indicating that the measurement is not performed in a part of the periodic period from the base station, and the control section does not perform the measurement and the communication section performs reception or transmission of a signal from or to the base station based on the third information in the part of the periodic period.

With the above-described configuration, the reception or transmission of the signal can be performed in a part of the periodic period by using the third information from the base station as a control criterion.

In one example, the second information indicates that the measurement is not performed in the part or another part of the periodic period, after transmitting the second information, the communication section receives fourth information indicating that the measurement is not performed in the part of the periodic period from the base station, and the control section does not perform the measurement and the communication section performs reception or transmission of a signal from or to the base station based on the fourth information in the part of the periodic period.

With the above-described configuration, the reception or transmission of the signal can be performed in a part of the periodic period by using the fourth information from the base station as a control criterion.

In one example, the second information indicates that the measurement is not performed in the part of the periodic period, after transmitting the second information, the communication section receives fifth information confirming that the measurement is not performed in the part of the periodic period from the base station, and the control section does not perform the measurement and the communication section performs reception or transmission of a signal from or to the base station based on the second information and the fifth information in the part of the periodic period.

With the above-described configuration, the reception or transmission of the signal can be performed in a part of the periodic period based on the second information transmitted from the terminal and the fifth information from the base station.

In one example, the second information indicates that the measurement is not performed in the part of the periodic period, and the control section does not perform the measurement and the communication section performs reception or transmission of a signal from or to the base station based on the second information in the part of the periodic period.

With the above-described configuration, the reception or transmission of the signal can be performed in a part of the periodic period as desired by the terminal based on the second information transmitted from the terminal.

According to one aspect of the present disclosure, a communication method performed by a terminal is provided, the communication method including: receiving, from a base station, first information related to a measurement using a measurement signal, periodically configuring a period associated with the measurement using the measurement signal based on the first information, transmitting second information indicating that the measurement is not performed to the base station, and performing reception or transmission of a signal from or to the base station while not performing the measurement according to the transmission of the second information in a part of the period that is periodic.

With the above-described configuration, the measurement is not performed and the reception or transmission of the signal can be performed in a part of the periodic period in response to the transmission of the second information to the base station, so that the influence caused by the scheduling restriction related to the measurement can be reduced.

### <Hardware Structure>

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

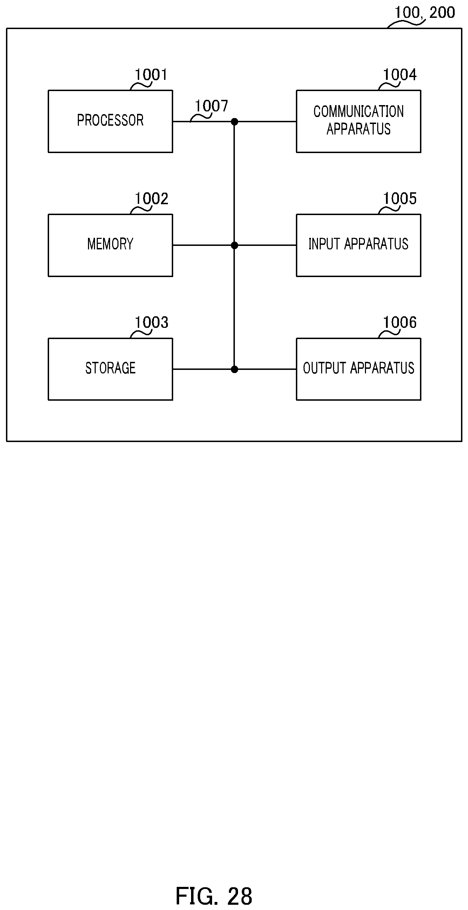

For example, a base station, a terminal, and so on according to one embodiment of the present disclosure may function as a computer that performs the processes of the communication method of the present disclosure. FIG. 28 is a diagram to show an example of a hardware structure of a base station and a terminal according to one embodiment of the present disclosure. Physically, the above-described base station 100 and terminal 200 may each be formed as a computer apparatus that includes processor 1001, memory 1002, storage 1003, communication apparatus 1004, input apparatus 1005, output apparatus 1006, bus 1007, and so on.

Note that in the present disclosure, the words such as an apparatus, a circuit, a device, a section, a unit, and so on can be interchangeably interpreted. The hardware structure of base station 100 and terminal 200 may be configured to include one or more of apparatuses shown in the drawings, or may be configured not to include part of apparatuses.

Each function of base station 100 and terminals 200 is implemented, for example, by allowing certain software (programs) to be read on hardware such as processor 1001 and memory 1002, and by allowing processor 1001 to perform calculations to control communication via communication apparatus 1004 and control at least one of reading and writing of data in memory 1002 and storage 1003.

Processor 1001 controls the whole computer by, for example, running an operating system. Processor 1001 may be configured with a central processing unit (CPU), which includes interfaces with peripheral apparatus, control apparatus, computing apparatus, a register, and so on. For example, at least part of above-described control section 103, control section 203, and so on may be implemented by processor 1001.

Furthermore, processor 1001 reads programs (program codes), software modules, data, and so on from at least one of storage 1003 and communication apparatus 1004, into memory 1002, and performs various processes according to these. As for the programs, programs to allow computers to perform at least part of the operations of the above-described embodiments are used. For example, control section 203 of terminal 200 may be implemented by control programs that are stored in memory 1002 and that operate on processor 1001, and other functional blocks may be implemented likewise. The various processes have been described to be performed by single processor 1001. However, the processes may be performed by two or more processors 1001 simultaneously or sequentially. Processor 1001 may be implemented by one or more chips. It should be noted that the program may be transmitted from a network via a telecommunication line.

Memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. Memory 1002 may be referred to as a "register," a "cache," a "main memory (primary storage apparatus)" and so on. Memory 1002 can store executable programs (program codes), software modules, and the like for implementing the communication method according to one embodiment of the present disclosure.

Storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. Storage 1003 may be referred to as "auxiliary storage apparatus." The above recording medium may be a database including memory 1002 and/or storage 1003, a server, or any other appropriate medium.

Communication apparatus 1004 is hardware (transmitting/receiving device) for allowing inter-computer communication via at least one of wired and wireless networks, and may be referred to as, for example, a "network device," a "network controller," a "network card," a "communication module," and so on. Communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmission section 101, reception section 102, reception section 201, transmission section 202, and the like, may be realized by communication apparatus 1004.

Input apparatus 1005 is an input device that receives input from the outside (for example, a keyboard, a mouse, a microphone, a switch, a button, a sensor, and so on). Output apparatus 1006 is an output device that allows sending output to the outside (for example, a display, a speaker, a Light Emitting Diode (LED) lamp, and so on). Note that input apparatus 1005 and output apparatus 1006 may be provided in an integrated structure (for example, a touch panel).

Furthermore, these types of apparatus, including processor 1001, memory 1002, and others, are connected by bus 1007 for communicating information. Bus 1007 may be formed with a single bus, or may be formed with buses that vary between pieces of apparatus.

Also, base station 100 and terminals 200 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Supplement to Embodiment)

While the embodiment of the present disclosure has been described above, the disclosed invention is not limited to such an embodiment, and a person skilled in the art would understand various variations, modifications, alternatives, substitutions, and the like. Specific numerical examples have been used in the description to facilitate understanding of the invention, but unless otherwise noted, these numbers are merely examples and any suitable values may be used. The classification of the items in the above description is not essential to the present disclosure, and matters described in two or more items may be combined and used as necessary, and matters described in one item may be applied to matters described in another item (as long as they do not contradict each other). The boundaries of the functional sections and processing sections in the functional block diagram do not necessarily correspond to the boundaries of physical components. The operations of a plurality of functional sections may be performed physically by one component, or the operation of one functional section may be performed physically by a plurality of components. The processing procedures described in the embodiment may be performed in a different order as long as there is no contradiction. For convenience of description of the processing, the base station and the terminal have been described using functional block diagrams, but such apparatuses may be implemented in hardware, software, or a combination thereof. Software that operates on a processor included in the base station according to an embodiment of the present disclosure, and software that operates on a processor included in the terminal according to an embodiment of the present disclosure may each be stored in any suitable storage medium, such as a random access memory (RAM), a flash memory, a read-only memory (ROM), an erasable programmable read-only memory (EPROM), an electrically erasable programmable read-only memory (EEPROM), a register, a hard disk (HDD), a removable disk, a CD-ROM, a database, a server, or the like.

### <Notification and Signaling of Information>

Notification of information is by no means limited to the embodiments described in the present disclosure, and other methods may be used as well. For example, indication of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

### <Application System>

The embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), New radio access (NX), Future generation radio access (FX), W-CDMA (registered trademark), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

### <Processing Procedure and the like>

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

### <Operation of Base Station>

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station. However, a combination of multiple other network nodes may be considered (e.g., MME and S-GW).

### <Direction of Input and Output>

The information or signals described in this disclosure may be output from a higher layer (or lower layer) to a lower layer (or higher layer). The information or signals may be input or output through multiple network nodes.

### <Handling of Input and Output Information and the like>

The input or output information may be stored in a specific location (e.g., memory) or managed using management tables. The input or output information may be overwritten, updated, or added. The information that has been output may be deleted. The information that has been input may be transmitted to another apparatus.

### <Determination Method>

A decision or a determination may be realized by a value (0 or 1) represented by one bit, by a boolean value (true or false), or by comparison of numerical values (e.g., comparison with a predetermined values).

### <Variations and the like of Aspects>

Each aspect/embodiment described in the present disclosure may be used independently, may be used in combination, or may be used by switching according to operations. Further, indication (transmission/reporting) of predetermined information (e.g., indication (transmission/reporting) of "X") is not limited to an explicit indication (transmission/reporting), and may be performed by an implicit indication (transmission/reporting) (e.g., by not performing indication (transmission/reporting) of the predetermined information).

As described above, the present invention has been described in detail. It is apparent to a person skilled in the art that the present disclosure is not limited to one or more embodiments of the present disclosure described in the present specification. Modifications, alternatives, replacements, etc., of the present disclosure may be possible without departing from the subject matter and the scope of the present disclosure defined by the descriptions of claims. Therefore, the descriptions of the present specification are for illustrative purposes only, and are not intended to be limitations to the present disclosure.

### <Software>

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

### <Information and Signals>

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

### <System and Network>

As used in the present disclosure, the terms "system" and "network" are used interchangeably.

### <Names of Parameters and Channels>

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

### <Base Station>

In the present disclosure, the terms such as a "base station (BS)," a "radio base station," a "fixed station," a "NodeB," an "eNB (eNodeB)," a "gNB (gNodeB)," an "access point," a "transmission point," a "reception point," a "transmission/reception point," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

### <Mobile Station>

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

### <Base Station/Mobile Station>

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a terminal. For example, an embodiment of the present disclosure may be applied to the structure that replaces a communication between a base station and a terminal with a communication between a plurality of terminals (for example, which may be referred to as "Device-to-Device (D2D)," "Vehicle-to-Everything (V2X)," and the like). In this case, the terminal may have the functions of the base station described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the terminal in the present disclosure may be interpreted as base station. In this case, the base station may have the functions of the terminal described above.

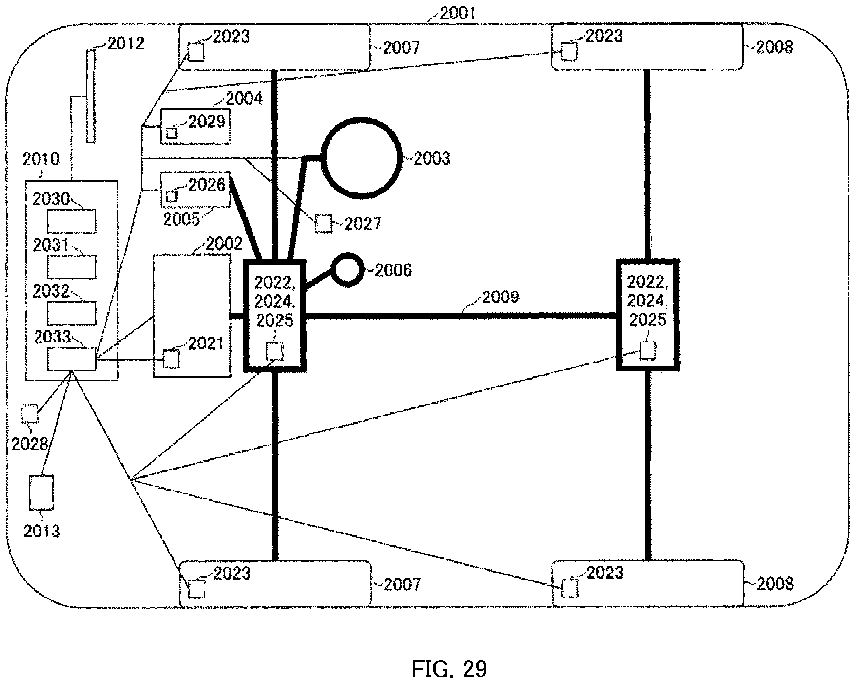

FIG. 29 shows an example of a configuration of vehicle 2001. As shown in FIG. 29, vehicle 2001 includes drive section 2002, steering section 2003, accelerator pedal 2004, brake pedal 2005, shift lever 2006, front wheel 2007, rear wheel 2008, axle 2009, electronic control section 2010, various sensors 2021 to 2029, information service section 2012, and communication module 2013. The aspects/embodiments described in the present disclosure may be applied to a communication device mounted in vehicle 2001, and may be applied to, for example, communication module 2013.

Drive section 2002 may include, for example, an engine, a motor, and a hybrid of an engine and a motor. Steering section 2003 includes at least a steering wheel and is configured to steer at least one of the front wheel or the rear wheel, based on the operation of the steering wheel operated by the user.

Electronic control section 2010 includes microprocessor 2031, memory (ROM, RAM) 2032, and communication port (IO port) 2033. Electronic control section 2010 receives signals from the various sensors 2021 to 2029 provided in vehicle 2001. Electronic control section 2010 may be referred to as an ECU (Electronic control unit).

Signals from various sensors 2021 to 2029 include a current signal from current sensor 2021 which senses the current of the motor, a front or rear wheel rotation signal acquired by revolution sensor 2022, a front or rear wheel pneumatic signal acquired by pneumatic sensor 2023, a vehicle speed signal acquired by vehicle speed sensor 2024, an acceleration signal acquired by acceleration sensor 2025, a stepped-on accelerator pedal signal acquired by accelerator pedal sensor 2029, a stepped-on brake pedal signal acquired by brake pedal sensor 2026, an operation signal of a shift lever acquired by shift lever sensor 2027, and a detection signal, acquired by object detection sensor 2028, for detecting an obstacle, a vehicle, a pedestrian, and the like.

Information service section 2012 includes various devices for providing (outputting) various kinds of information such as driving information, traffic information, and entertainment information, including a car navigation system, an audio system, a speaker, a television, and a radio, and one or more ECUs controlling these devices. The information service section 2012 provides various types of multimedia information and multimedia services to the occupants of the vehicle 2001 by using information obtained from the external device through the communication module 2013 or the like.

Information service section 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

Driving support system section 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, driving support system section 2030 transmits and receives various types of information via communication module 2013 to realize a driving support function or an autonomous driving function.

Communication module 2013 may communicate with microprocessor 2031 and components of vehicle 2001 via a communication port. For example, communication module 2013 transmits and receives data via communication port 2033, to and from drive section 2002, steering section 2003, accelerator pedal 2004, brake pedal 2005, shift lever 2006, front wheel 2007, rear wheel 2008, axle 2009, microprocessor 2031 and memory (ROM, RAM) 2032 in electronic control section 2010, and sensors 2021 to 2029 provided in vehicle 2001.

Communication module 2013 is a communication device that can be controlled by microprocessor 2031 of electronic control section 2010 and that is capable of communicating with external devices. For example, various kinds of information are transmitted to and received from external devices through radio communication. Communication module 2013 may be internal to or external to electronic control section 2010. The external devices may include, for example, a base station, a mobile station, or the like.

Communication module 2013 may transmit at least one of signals from various sensors 2021 to 2029 described above input to electronic control section 2010, information obtained based on the signals, and information based on an input from the outside (a user) obtained via information service section 2012, to the external apparatus via radio communication. Electronic control section 2010, various sensors 2021 to 2029, information service section 2012, and the like may be referred to as input units that receive input. For example, the PUSCH transmitted by communication module 2013 may include information based on the input.

Communication module 2013 receives various types of information (traffic information, signal information, inter-vehicle information, etc.) transmitted from the external devices and displays the received information on information service section 2012 provided in vehicle 2001. Information service section 2012 may be referred to as an output unit that outputs information (for example, outputs information to devices, such as a display and a speaker, based on the PDSCH received by communication module 2013 (or data/information decoded from the PDSCH)). In addition, communication module 2013 stores the various types of information received from the external devices in memory 2032 available to microprocessor 2031. Based on the information stored in memory 2032, microprocessor 2031 may control drive section 2002, steering section 2003, accelerator pedal 2004, brake pedal 2005, shift lever 2006, front wheel 2007, rear wheel 2008, axle 2009, and sensors 2021 to 2029 mounted in vehicle 2001.

### <Meaning and Interpretation of Terms>

As used herein, the term "determining" may encompass a wide variety of actions. For example, "determining" may be regarded as judging, calculating, computing, processing, deriving, investigating, looking up or search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Also, "determining" may be replaced with "assuming," "expecting," "considering," and the like.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access." As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

### <Reference Signal>

A reference signal may be abbreviated as an "RS," and may be referred to as a "pilot" and so on, depending on which standard applies.

### <Meaning of "Based On">

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

### <"First" and "Second">

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

### <Means>

"Means" included in the configuration of each of the above apparatuses may be replaced by "parts," "circuits," "devices," etc.

### <Open Form>

In the case where the terms "include," "including" and variations thereof are used in the present disclosure, these terms are intended to be comprehensive in the same way as the term "comprising." Further, the term "or" used in the present specification is not intended to be an "exclusive or."

### <Time Units such as TTI, Frequency Units such as RB, and Radio Frame Configuration>

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "Transmission Time Interval (TTI)," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP."

The above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

### <Maximum Transmit Power>

The "maximum transmit power" described in the present disclosure may mean a maximum value of the transmit power, the nominal UE maximum transmit power, or the rated UE maximum transmit power.

### <Article>

In the present disclosure, where an article is added by translation, for example "a," "an," and "the," the disclosure may include that the noun following these articles is plural.

### <"Different">

In this disclosure, the term "A and B are different" may mean "A and B are different from each other." It should be noted that the term "A and B are different" may mean "A and B are different from C." Terms such as "separated" or "combined" may be interpreted in the same way as the above-described "different."

### Industrial Applicability

An aspect of the present disclosure is useful for radio communication systems.

### Reference Signs List

10 Radio communication system
20 NG-RAN
100 Base station (gNB)
200 Terminal (UE)
101, 202 Transmission section
102, 201 Reception section
103, 203 Control section

## Claims

1. A terminal, comprising:
a communication section that receives, from a base station, first information related to an extended period for measurement using a measurement signal; and
a control section that periodically configures the extended period for the measurement using the measurement signal based on the first information, wherein
the communication section transmits second information indicating that the measurement is not performed to the base station, and
the control section does not perform the measurement and the communication section performs reception or transmission of a signal from or to the base station according to the transmission of the second information in a part of the extended period that is periodic.

2. The terminal according to claim 1, wherein:
after transmitting the second information, the communication section receives third information indicating that the measurement is not performed in the part of the periodic extended period from the base station, and
the control section does not perform the measurement and the communication section performs reception or transmission of the signal from or to the base station based on the third information in the part of the periodic extended period.

3. The terminal according to claim 1, wherein:
the second information indicates that the measurement is not performed in the part or another part of the periodic extended period,
after transmitting the second information, the communication section receives fourth information indicating that the measurement is not performed in the part of the periodic extended period from the base station, and
the control section does not perform the measurement and the communication section performs reception or transmission of the signal from or to the base station based on the fourth information in the part of the periodic extended period.

4. The terminal according to claim 1, wherein:
the second information indicates that the measurement is not performed in the part of the periodic extended period,
after transmitting the second information, the communication section receives fifth information confirming that the measurement is not performed in the part of the periodic extended period from the base station, and
the control section does not perform the measurement and the communication section performs reception or transmission of the signal from or to the base station based on the second information and the fifth information in the part of the periodic extended period.

5. The terminal according to claim 1, wherein:
the second information indicates that the measurement is not performed in the part of the periodic extended period, and
the control section does not perform the measurement and the communication section performs reception or transmission of the signal from or to the base station based on the second information in the part of the periodic extended period.

6. A communication method performed by a terminal, comprising:
receiving, from a base station, first information related to an extended period for measurement using a measurement signal;
periodically configuring the extended period for the measurement using the measurement signal based on the first information;
transmitting second information indicating that the measurement is not performed to the base station; and
performing reception or transmission of a signal from or to the base station while not performing the measurement according to the transmission of the second information in a part of the extended period that is periodic.
